# EUROPEAN PATENT APPLICATION

(11) **EP 4 588 766 A2**
(43) Date of publication of application: **23.07.2025**
(21) Application number: 25176185.4
(22) Date of filing: 24.06.2022
(51) Int. Cl.: B62J 1/08

(54) **ELECTRONICALLY ACTUATED DROPPER SEATPOST**

(30) Priority: 24.06.2021 US 202163214750 P
(62) Divisional of application: 22181122.7
(71) Applicant: Fox Factory, Inc., Duluth, GA 30097 (US)
(72) Inventor: Coaplen, Joshua, Duluth, 30097 (US); Brown IV, William O., Duluth, 30097 (US); Pollock, Thomas, Duluth, 30097 (US); Erickson, Everet Owen, Duluth, 30097 (US); Otterness, Christopher, Duluth, 30097 (US)
(74) Representative: Greaves Brewster LLP

(57) **Abstract**

An electronically actuated seatpost, comprising:
a first tube (310) telescopically coupled with a second tube (315), wherein the second tube (315) is substantially static with respect to a bicycle frame; and
a power source for supplying power to operate a seatpost height adjustment system, wherein the power source is not coupled with first tube (310).

## Description

### CROSS-REFERENCE TO RELATED APPLICATIONS

This application claims priority from U.S. Provisional Patent Application No. 63/214,750 filed on June 24, 2021.

### TECHNICAL FIELD

Embodiments of the invention generally relate to systems and methods for electronically actuating hydraulic flow states in a dropper seatpost and other components. Some embodiments relate to an electronically actuated dropper seatpost, and a vehicle comprising the electronically actuated dropper seatpost.

### BACKGROUND

Prior rigid seatpost designs have begun to be replaced with dropper seatposts. In a dropper seatpost, the seatpost can be lowered or raised by a rider via a lever. When the rider operates the lever, the dropper seatpost will move the saddle from the rider's set saddle height to a lowered position, e.g., moving the saddle down and out of the rider's way. The rider can then operate the lever again and the dropper seatpost will return the saddle to the riders previously established saddle height. Often, however, dropper seatpost assemblies can add undesired amounts of weight, complexity, and the like.

### SUMMARY OF THE INVENTION

According to some embodiments there is provided an electronically actuated dropper seatpost. The seatpost may comprise an upper post and a lower post telescopically coupled with said upper post. The seatpost may comprise an electronically adjustable valve assembly configured to control a telescopic movement of said upper post and said lower post. The electronically adjustable valve assembly may comprise a valve controlling a flow path. The valve assembly may comprise a motive component. An electronic input to said motive component may change a flow rate of a fluid through said valve.

In some embodiments the valve may be a rotary flow control valve. The rotary flow control valve may comprise a drive feature. An electronic input to said motive component may cause said motive component to turn said drive feature thereby changing a position of said rotary flow control valve.

In some embodiments the valve may comprise a valve needle. The valve may comprise an orifice. An electronic input to said motive component may cause said motive component to move said valve needle with respect to said orifice.

In some embodiments the motive component may be a DC motor.

In some embodiments the electronically actuated dropper seatpost may further comprise a lug. The seatpost may comprise a cutout in a portion of said valve, wherein an interaction between said cutout and said lug creates a bump stop. The seatpost may comprise a control system for said DC motor. The control system may comprise a current limit. The bump stop may cause the DC motor to reach said current limit.

In some embodiments the electronically actuated dropper seatpost may, further comprise a power source. The power source may provide said electronic input to said motive component. The power source may be removably coupled with said dropper seatpost. In some embodiments the power source may be fixedly coupled with said dropper seatpost. In some embodiments

In some embodiments the power source may be coupled with a component other than said dropper seatpost. The power source may provide said electronic input to said motive component and said component other than said dropper seatpost.

In some embodiments the electronically actuated dropper seatpost may further comprise a controller. The controller may provide an input to said motive component. The input may define said change of said flow rate of said fluid through said valve. In some embodiments the controller may be removably coupled with said dropper seatpost. In some embodiments the controller may be fixedly coupled with said dropper seatpost.

In some embodiments the controller may be coupled with a component other than said dropper seatpost. The controller may provide another input to said component other than said dropper seatpost. The other input may define a change to a characteristic of said component other than said dropper seatpost.

According to some embodiments there is provided an electronically actuated dropper seatpost. The seatpost may comprise an upper post and a lower post telescopically coupled with said upper post. The seatpost may comprise a power source. The seatpost may comprise an electronically adjustable valve assembly. The valve assembly may be configured to control a telescopic movement of said upper post and said lower post. The valve assembly may comprise a valve controlling a flow path. The valve assembly may comprise a motive component. An electronic input from said power source to said motive component may change a flow rate of a fluid through said valve.

In some embodiments the electronically actuated dropper seatpost may comprise a lug. The seatpost may comprise a cutout in a portion of said valve. An interaction between said cutout and said lug may create a bump stop. The seatpost may comprise a control system for said motive component. The control system may comprise a current limit. The bump stop may causes said motive component to reach said current limit.

In some embodiments the power source may be removably coupled with said dropper seatpost. The power source may be located in the location from a group of locations consisting of: co-located with said motive component, co-located with a controller, co-located with said motive component and said controller, located apart from said motive component, located apart from said controller, and located apart from said motive component and said controller.

In some embodiments the power source may be fixedly coupled with said dropper seatpost. The power source may located in the location from a group of locations consisting of: co-located with said motive component, co-located with a controller, co-located with said motive component and said controller, located apart from said motive component, located apart from said controller, and located apart from said motive component and said controller.

In some embodiments the electronically actuated dropper seatpost may further comprise a controller. The controller may provide an input to said motive component. The input may define said change of said flow rate of said fluid through said valve. In some embodiments the controller may be removably coupled with said dropper seatpost. In some embodiments the controller may be fixedly coupled with said dropper seatpost. The controller may be located in the location from a group of locations consisting of: co-located with said motive component, co-located with said power source, co-located with said motive component and said power source, located apart from said motive component, located apart from said power source, and located apart from said motive component and said power source.

In some embodiments the controller may be coupled with a component other than said dropper seatpost. The controller may provide an input to said motive component. The input may define said change of said flow rate of said fluid through said valve. The controller may provide another input to said component other than said dropper seatpost. The another input may define a change to a characteristic of said component other than said dropper seatpost. The controller may be located in the location from a group of locations consisting of: co-located with said motive component, co-located with said power source, co-located with said motive component and said power source, located apart from said motive component, located apart from said power source, and located apart from said motive component and said power source.

According to some embodiments there is provided an electronically actuated dropper seatpost. The seatpost may comprise an upper post and a lower post telescopically coupled with said upper post. The seatpost may comprise a power source. The seatpost may comprise an electronically adjustable valve assembly configured to control a telescopic movement of said upper post and said lower post. The valve assembly may comprise a valve controlling a flow path. The valve assembly may comprise a motive component. An electronic input from the power source to the motive component may change a flow rate of a fluid through said valve. The valve assembly may comprise a controller. The controller may provide an input to said motive component. The input may define said change of said flow rate of said fluid through said valve, said controller removably coupled with said dropper seatpost.

In some embodiments the power source may be located in the location from a group of locations consisting of: co-located with said motive component, co-located with said controller, co-located with said motive component and said controller, located apart from said motive component, located apart from said controller, and located apart from said motive component and said controller.

In some embodiments the controller may be located in the location from a group of locations consisting of: co-located with said motive component, co-located with said power source, co-located with said motive component and said power source, located apart from said motive component, located apart from said power source, and located apart from said motive component and said power source.

According to some embodiments there is provided an electronically actuated bicycle component. The component may comprise an actuating unit configured to actuate the component. The component may comprise at least one controller configured to operate the actuating unit. The at least one controller may be configured to change the operation of the actuating unit when a condition of the actuating unit satisfies a predetermined criterion.

In some embodiments the at least one controller may be configured to stop the operation of the actuating unit when the condition of the actuating unit satisfies the predetermined criteria.

In some embodiments the at least one controller may be configured to sense a current supplied to the actuating unit and determine whether the sensed current satisfies the predetermined criteria.

In some embodiments a first controller is configured to sense a current supplied to the actuating unit and a second controller is configured to determine whether the sensed current satisfies the predetermined criteria.

In some embodiments at least one controller is configured to stop the operation of the actuating unit in response to an input indicative of a stall state of the actuating unit.

In some embodiments at least one controller is configured to control a power supply to the actuating unit based on a determined state of the actuating unit.

In some embodiments the bicycle component may further comprise at least two wires connecting the at least one controller with the actuating unit.

In some embodiments the at least two wires may be in a location in a gap between sliding parts of the bicycle component.

In some embodiments the bicycle component may be a seatpost or a suspension.

In some embodiments a power source may be located at an upper portion of a part of the seatpost or the suspension, which is substantially static with respect to a bicycle frame.

In some embodiments a location of the at least one controller may be selected from a group consisting of: a location at a portion of the bicycle component, which is substantially static with respect to a bicycle frame, a location that is spaced apart from the bicycle component, a location at a bicycle frame, a location inside a bicycle component, a location at a bicycle component, a location that is spaced apart from a power source, a location that is proximal to the power source, or any combinations thereof.

In some embodiments the actuating unit may comprises a motor or a solenoid.

In some embodiments the bicycle component may further comprise a power source for supplying power to operate the actuating unit.

In some embodiments a location of the power source is selected from a group consisting of: a location at a portion of the bicycle component, which is substantially static with respect to a bicycle frame, a location that is spaced apart from the bicycle component, a location at a bicycle frame, a location inside a bicycle component, a location at a bicycle component, a location that is spaced apart from the at least one controller, a location that is proximal to the at least on controller, or any combination thereof.

In some embodiments the power source is removable or integrated with the bicycle component.

In some embodiments the power source is an electric bicycle battery.

In some embodiments the power source is rechargeable.

According to some embodiments there is provided an electronically actuated bicycle component. The component may comprise an actuating unit configured to actuate the component. The component may comprise at least one controller configured to operate the actuating unit. The at least one controller may be configured to modulate the operation of the actuating unit in response to an input indicative of a stall state of the actuating unit.

According to some embodiments there is provided an electronically actuated bicycle component. The component may comprise an actuating unit configured to actuate the component. The component may comprise at least one controller configured to operate the actuating unit. The component may comprise a power source for supplying power to operate the component. At least one of the power source or the at least one controller may be located at a portion of the bicycle component that is substantially static with respect to a bicycle frame.

According to some embodiments there is provided a non-transitory computer readable storage medium having stored thereon computer-executable instructions that, when executed by a computer, may cause said computer to operate an actuator of a bicycle component upon receipt of an actuating signal. The instructions may cause the computer to sense current supplied to the actuator. The instructions may cause the computer to compare the sensed current with predetermined values stored in a memory. The instructions may cause the computer to determine a state of the actuator based on said comparison. The instructions may cause the computer to change the operation of the actuator based on the determined state of the actuator.

In some embodiments the instructions are adapted so that changing the operation of the actuator includes stopping the operation of the actuator in response to an input indicative of a stall state of the actuator.

According to some embodiments there is provided a non-transitory computer readable storage medium having stored thereon computer-executable instructions that, when executed by a computer, may cause the computer to operate an actuator of the bicycle component upon receipt of an actuating signal. The instructions may cause the computer to sense a condition of the actuator. The instructions may cause the computer to compare the sensed condition with predetermined values stored in a memory. The instructions may cause the computer to determine a state of the actuator based on said comparison. The instructions may cause the computer to regulate a power supply to the actuator based on the determined state of the actuator.

In some embodiments the instructions may be adapted so that regulating a power supply to the actuator includes stopping the power supply to the actuator in response to an input indicative of a stall state of the actuator.

According to some embodiments there is provided an electronically actuated seatpost. The seatpost may comprise a first tube telescopically coupled with a second tube. The second tube may be substantially static with respect to a bicycle frame. The seatpost may comprise a power source for supplying power to operate a seatpost height adjustment system. The power source may not be coupled with first tube.

In some embodiments the seatpost height adjustment system may comprise an actuating unit. The adjustment system may comprise at least one controller configured to operate the actuating unit. The adjustment system may comprise at least two wires connecting the actuating unit with the at least one controller.

In some embodiments the at least two wires may be located in a gap between the first tube and the second tube.

In some embodiments the at least two wires may be located in a gap between sliding parts of the seatpost.

In some embodiments the at least one controller may be configured to sense electrical current supplied to the actuating unit.

In some embodiments the at least one controller may be configured to determine a state of the actuating unit.

In some embodiments the at least one controller may be configured to control a power supply to the actuating unit based on the determined state of the actuating unit.

In some embodiments the at least one controller may be located at the second tube.

In some embodiments the at least one controller may be configured to stop the power supply to the actuating unit in response to an input indicative of a stall state of the actuating unit.

In some embodiments the at least one controller may be configured to stop the power supply to the actuating unit when current supplied to the actuating unit satisfies predetermined criteria.

In some embodiments the actuating unit is configured to operate a valve.

In some embodiments a location of the at least one controller may be selected from a group consisting of: a location at the second tube, a location spaced apart from the seatpost, a location inside the seatpost, a location at a bicycle frame, a location inside a bicycle component, a location at a bicycle component, a location that is spaced apart from the power source, a location that is proximal to the power source, or any combinations thereof.

In some embodiments the actuating unit may comprise a motor or a solenoid.

In some embodiments the seatpost may comprise a microcontroller and a motor controller.

In some embodiments the power source may be removable or integrated with the seatpost.

In some embodiments the power source may be an electric bicycle battery.

In some embodiments the power source is rechargeable.

According to some embodiments there is provided an electronically actuated seatpost. The seatpost may comprise a first tube telescopically coupled with a second tube. The second tube may be substantially static with respect to a bicycle frame. The seatpost may comprises at least one controller configured to operate a seatpost height adjustment system. The at least one controller may be located at the second tube.

In some embodiments the seatpost height adjustment system may comprise an actuating unit. The adjustment system may comprise at least two wires connecting the actuating unit with the at least one controller.

In some embodiments the at least two wires may be located in a gap between the first tube and the second tube.

In some embodiments the at least two wires may be located in a gap between sliding parts of the seatpost.

In some embodiments the at least one controller may be configured to sense electrical current supplied to the actuating unit.

In some embodiments the at least one controller may be configured to determine a state of the actuating unit.

In some embodiments the at least one controller may be configured to control a power supply to the actuating unit based on the determined state of the actuating unit.

In some embodiments the at least one controller may be located at the second tube.

In some embodiments the at least one controller may be configured to stop a power supply to the actuating unit in response to an input indicative of a stall state of the actuating unit.

In some embodiments the at least one controller may be configured to stop a power supply to the actuating unit when current supplied to the actuating unit satisfies predetermine criteria.

In some embodiments the actuating unit may be configured to operate a valve.

In some embodiments the seatpost may comprises a microcontroller and a motor controller.

In some embodiments the seatpost may comprises a power source.

In some embodiments the location of the power source may be selected from a group consisting of: a location at the second tube, a location spaced apart from the seatpost, a location inside the seatpost, a location at a bicycle frame, a location inside a bicycle component, a location at a bicycle component, a location that is spaced apart from the at least one controller, a location that is proximal to the at least one controller, or any combinations thereof.

In some embodiments the actuating unit may comprise a motor or a solenoid.

In some embodiments the power source may be removable or integrated with the seatpost.

In some embodiments the power source may be an electric bicycle battery.

In some embodiments the power source may be rechargeable.

According to some embodiments there is provided a vehicle comprising an electrically actuated dropper seatpost as set out above, as described or as claimed anywhere herein. According to some embodiments there is provided a bicycle comprising an electronically actuated bicycle component as set out above, as described or as claimed anywhere herein.

According to some embodiments there is provided an electronically actuated dropper seatpost adapted to be controlled by a control process. The control process may operate utilizing stall detection of a direct current (DC) motor. The current may be sensed through the DC motor. The sensed current may be analyze to determine when the sensed current satisfies a certain set of criteria indicating that the DC motor is at stall condition. In so doing, the electronically actuated dropper seatpost are able to recognize that the DC motor has completed a desired movement/translation/rotation of the motor itself and/or some portion of the seatpost (e.g., extending some portion of the seatpost (to some desired position), retracting some portion of the seatpost (to some desired position, rotated some portion of the seatpost (to a desired orientation), or otherwise adjusted some portion of the seatpost to a desired position). It should further be noted that although the above and below descriptions specifically recite embodiments utilizing a DC motor, various embodiments of the present invention are also well suited to be utilized with an element other than a DC motor. For example, embodiments are also well suited to being utilized in conjunction with, but not limited to, an actuator, a solenoid and various other elements to enable the desired movement/translation/rotation of some portion of the seatpost.

Throughout the description and claims of this specification, the words "comprise" and "contain" and variations of the words, for example "comprising" and "comprises", mean "including but not limited to", and do not exclude other components, integers or steps. Moreover the singular encompasses the plural unless the context otherwise requires: in particular, where the indefinite article is used, the specification is to be understood as contemplating plurality as well as singularity, unless the context requires otherwise.

Preferred features of each aspect of the invention may be as described in connection with any of the other aspects. Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible.

### BRIEF DESCRIPTION OF THE DRAWINGS

Aspects of the present invention are illustrated by way of example, and not by way of limitation, in the accompanying drawings, wherein:
Figure 1A is a perspective view of a bicycle having a plurality of electronically actuated components including a dropper seatpost, in accordance with an embodiment.
Figure 1B is a side view of the bicycle of Figure 1A showing only some of the plurality of electronically actuated components including the dropper seatpost, in accordance with an embodiment.
Figure 1C is a perspective view of an adjustable shock assembly having an electronically actuated valve, in accordance with an embodiment.
Figure 2 is a perspective view of a handlebar with a control lever coupled therewith, in accordance with an embodiment.
Figure 3A is a perspective view of an electronically adjustable valve assembly in the dropper seatpost, in accordance with an embodiment.
Figure 3B is a cross-section view of the electronically adjustable valve assembly in the dropper seatpost, in accordance with an embodiment.
Figure 4A is a cross-section view (identified in Figure 3B) of a portion of the dropper seatpost including a motor to drive the electronically adjustable valve assembly, in accordance with an embodiment.
Figure 4B is a cross-section view (identified in Figure 3B) of a portion of the dropper seatpost including a mechanical input to adjust the electronically adjustable valve assembly, in accordance with an embodiment.

The drawings referred to in this description should be understood as not being drawn to scale except if specifically noted.

### DETAILED DESCRIPTION

The detailed description set forth below in connection with the appended drawings is intended as a description of various embodiments of the present invention and is not intended to represent the only embodiments in which the present invention is to be practiced. Each embodiment described in this disclosure is provided merely as an example or illustration of the present invention, and should not necessarily be construed as preferred or advantageous over other embodiments. In some instances, well known methods, procedures, and objects have not been described in detail as not to unnecessarily obscure aspects of the present disclosure.

In general, a suspension system for a vehicle provides a motion modifiable connection between a portion of the vehicle that is in contact with a surface (e.g., an unsprung portion) and some or all of the rest of the vehicle that is not in contact with the surface (e.g., a suspended portion). For example, the unsprung portion of the vehicle that is in contact with the surface can include one or more wheel(s), skis, tracks, hulls, etc., while some or all of the rest of the vehicle that is not in contact with the surface include suspended portions such as a frame, a seat, handlebars, engines, cranks, etc.

The suspension system will include one or numerous components which are used to couple the unsprung portion of the vehicle (e.g., wheels, skids, wings, etc.) with the suspended portion of the vehicle (e.g., seat, cockpit, passenger area, cargo area, etc.). Often, the suspension system will include one or more shock assemblies which are used to reduce feedback from the unsprung portion of the vehicle before that feedback is transferred to the suspended portion of the vehicle, as the vehicle traverses an environment. However, the language used by those of ordinary skill in the art to identify a shock assembly used by the suspension system can differ while referring to the same (or similar) types of components. For example, some of those of ordinary skill in the art will refer to the shock assembly as a shock absorber, while others of ordinary skill in the art will refer to the shock assembly as a damper (or damper assembly).

Described in more detail herein, the adjustable shock assembly often consists of a (damping) piston and piston rod telescopically mounted in a fluid filled cylinder (e.g., a housing). The fluid (e.g., damping fluid, working fluid, etc.) may be, for example, a hydraulic oil, a gas such as nitrogen, air, or the like. In one embodiment, the adjustable shock assembly will include a mechanical spring (e.g., a helically wound spring that surrounds or is mounted in parallel with the body of the adjustable shock assembly). In one embodiment, the adjustable shock assembly will include an air spring. In one embodiment, the adjustable shock assembly will include both a mechanical spring and an air spring.

As used herein, the terms "down", "up", "downward", "upward", "lower", "upper", and other directional references are relative and are used for reference and identification purposes.

In its basic form, the suspension is used to increase ride comfort, performance, endurance, component longevity and the like. In general, the force of jarring events, rattles, vibrations, jostles, and the like which are encountered by the portion of the vehicle that is in contact with the surface are reduced or even removed as it transitions through the suspension before reaching suspended portions of the vehicle to include components such as seats, steering wheels/handlebars, pedals/foot pegs, fasteners, drive trains, engines, and the like.

For example, on a wheeled vehicle, a portion of the wheel (or tire) will be in contact with the surface being traversed (e.g., pavement, dirt, gravel, sand, mud, rocks, etc.) while a shock assembly and/or other suspension system components will be coupled between a wheel retaining assembly and the suspended portion of the vehicle (often a portion of the vehicle frame and associated systems, the seat, handlebars, pedals, controls, steering wheel, interior, etc.).

In a snow machine, a portion of the track and/or the skis that will be in contact with the surface being traversed (e.g., snow, ice, etc.) while a shock assembly and/or other suspension components will be coupled between a track retaining assembly (and similarly the skis retaining assembly) and the suspended portion of the vehicle (usually including the engine and associated systems, the seat, handlebars, etc.).

In a boat or PWC vehicle, a portion of the hull will be in contact with the surface of the water while a shock assembly and/or other suspension components will be coupled between the hull and the suspended portion(s) of the vehicle (such as the seat, the handlebars, a portion of the vehicle frame, and/or the like).

In an airplane in flight, it is the airframe that is in contact with the surface being traversed (e.g., the air) while a shock assembly and/or other suspension components will be coupled between the airframe and the suspended portion(s) of the vehicle (such as the seats and the like).

The term ride height refers to a distance between a portion of a vehicle and the surface across which the vehicle is traversing. Often, ride height is based on one or more of a number of different measurements such as, but not limited to, a distance between a part of the vehicle and the ground, a measurement between the top of an unsprung portion of a vehicle and a suspended portion of the vehicle there above, etc. For example, a portion of the wheel(s) (or ski, track, hull, etc.) will be in contact with the surface, while one or more adjustable shock assemblies and/or suspension components maintain the suspended portion of the vehicle a certain height there above.

The term initial sag settings or "sag" refers to a pre-defined vehicle ride height and suspension geometry based on the initial compression of one or more shock assemblies of the suspension system for a given vehicle when it is within its normal load envelope configuration (e.g., with a rider/driver and any initial load weight). Once the sag is established for a vehicle, it will be the designated ride height of the vehicle, until and unless the sag is changed.

The initial sag for a vehicle is usually established by the manufacturer. The vehicle sag can then be modified and/or adjusted by an owner, a mechanic, or the like. For example, an owner can modify the sag to designate a new normal ride height based on a vehicle use purpose, load requirements that are different than the factory load configuration, an adjustment modification and/or replacement of one or more of the suspension components, a change in tire size, a performance adjustment, aesthetics, and the like.

In one embodiment, the initial manufacturer will use sag settings resulting in a preestablished vehicle ride height based on vehicle use, size, passenger capacity, load capacity, and the like. For example, a truck (side-by-side, car, or the like) may have a preestablished sag based on an expected load (e.g., a number of passengers, an expected cargo requirement, etc.).

Regardless of the vehicle type, once the sag is established, in a static situation the ride height of the expectedly loaded vehicle should be at or about the established sag. When in motion, the ride height will change as the vehicle travels over the surface, and while the suspension system is used to reduce the transference of any input forces received from the surface to the rest of the vehicle it is also used to maintain the vehicle's sag.

However, when additional weight is added to the vehicle, the suspension and one or more adjustable shock assemblies will be compressed, and the vehicle ride height will be less than the sag. Additional information regarding sag and sag setup can be found in U.S. Patent 8,838,335 which is incorporated by reference herein, in its entirety.

As vehicle utilization scenarios change, one or more shock assemblies of the suspension system can be adjusted for different characteristics based on the use type of the vehicle, terrain, purpose (e.g., rock crawl, normal use, race set-up, etc.), and the like. This modification would result in a modified personal sag setting. For example, a downhill mountain bike rider (motocross rider, off-road truck driver, side-by-side rider, snow machine racer, etc.) would want a suspension configuration with a large range of motion and aggressive rebound and compression speeds to maintain as much contact as possible between the tires and the ground by absorbing the terrain events such as bumps, ruts, roots, rocks, dips, etc. while reducing the impacts felt at the suspended portion and also have the suspension return to its personal sag setting as quickly as possible in preparation for the next encounter.

In contrast, a street bike racer (track racing vehicle, boat/PWC racer, etc.) would want a firmer suspension configuration with a very small range of motion to provide feel for the grip of the tire, maintain friction and/or aerodynamic geometries, and the like, in order to obtain the maximum performance from the vehicle.

In one embodiment, there may be times where changes to a suspension component are desired during a given ride/drive. For example, a bike rider in a sprinting scenario would often want to firm up or possibly even lockout the suspension component to remove the opportunity for rider induced pedal bob. Similarly, a ride/drive from a paved road to an off-road environment (or vice-versa) would also be a time when a change to one or more suspension component settings is valuable.

With respect to the term lockout, for purposes of the following discussion, lockout refers to the most restricted flow state attainable or desirable. Thus, in one embodiment, lockout refers to a stoppage of all fluid flow through a given fluid path. However, in another embodiment, lockout does not stop all the fluid flow through a given fluid path. For example, a manufactured component may not be able to stop all fluid flow due to tolerances, or a manufacturer (designer, etc.) may not want to stop all fluid flow for reasons such as lubrication, cooling, etc. Similarly, a lockout state could be a "perceived lockout"; that is, the flow area through a flow path of the adjustable shock assembly has been reduced to a minimum size for a given adjustable shock assembly, machine, environment, speed, performance requirement, etc. For example, in one "perceived lockout" most, but not all, of the fluid flow is minimized while in another "perceived lockout" the fluid flow is reduced by only half (or a third, quarter, three-quarters, or the like).

The term "active", as used when referring to a valve or shock assembly component, means adjustable, manipulatable, etc., during typical operation of the valve. For example, an active valve can have its operation changed to thereby alter a corresponding shock assembly characteristic damping from a "soft" setting to a "firm" setting (or a stiffness setting somewhere therebetween) by, for example, adjusting a switch in a passenger compartment of a vehicle. Additionally, it will be understood that in some embodiments, an active valve may also be configured to automatically adjust its operation, and corresponding shock assembly damping characteristics, based upon, for example, operational information pertaining to the vehicle and/or the suspension with which the valve is used.

Similarly, it will be understood that in some embodiments, an active valve may be configured to automatically adjust its operation, and corresponding shock assembly damping characteristics, based upon received user input settings (e.g., a user-selected "comfort" setting, a user-selected "sport" setting, and the like). In many instances, an "active" valve is adjusted or manipulated electronically (e.g., using a powered solenoid, electric motor, poppet, or the like) to alter the operation or characteristics of a valve and/or other component. As a result, in the field of suspension components and valves, the terms "active", "electronic", "electronically controlled", and the like, are often used interchangeably.

The term "manual" as used when referring to a valve or shock assembly component means manually adjustable, physically manipulatable, etc., without requiring disassembly of the valve, damping component, or shock assembly which includes the valve or damping component. In some instances, the manual adjustment or physical manipulation of the valve, damping component, or shock assembly which includes the valve or damping component, occurs when the valve is in use. For example, a manual valve may be adjusted to change its operation to alter a corresponding shock assembly damping characteristic from a "soft" setting to a "firm" setting (or a stiffness setting somewhere therebetween) by, for example, manually rotating a knob, pushing or pulling a lever, physically manipulating an air pressure control feature, manually operating a cable assembly, physically engaging a hydraulic unit, and the like. For purposes of the present discussion, such instances of manual adjustment/physical manipulation of the valve or component can occur before, during, and/or after "typical operation of the vehicle".

It should further be understood that a vehicle suspension may also be referred to using one or more of the terms "passive", "active", "semi-active" or "adaptive". As is typically used in the suspension art, the term "active suspension" refers to a vehicle suspension which controls the vertical movement of the wheels relative to vehicle. Moreover, "active suspensions" are conventionally defined as either a "pure active suspension" or a "semi-active suspension" (a "semi-active suspension" is also sometimes referred to as an "adaptive suspension"). In a conventional "pure active suspension", a motive source such as, for example, an actuator, is used to move (e.g. raise or lower) a wheel with respect to the vehicle. In a "semi-active suspension", no motive force/actuator is employed to adjust move (e.g. raise or lower) a wheel with respect to the vehicle.

Rather, in a "semi-active suspension", the characteristics of the suspension (e.g. the firmness of the suspension) are altered during typical use to accommodate conditions of the terrain and/or the vehicle. Additionally, the term "passive suspension", refers to a vehicle suspension in which the characteristics of the suspension are not changeable during typical use, and no motive force/actuator is employed to adjust move (e.g. raise or lower) a wheel with respect to the vehicle. As such, it will be understood that an "active valve", as defined above, is well suited for use in a "pure active suspension" or a "semi-active suspension".

In the following discussion, an electronically adjustable component may be active and/or semi-active. In general, the electronically adjustable component will have one or more electronically adjustable features controlled by a motive component such as a solenoid, stepper motor, electric motor, or the like. In operation, the electronically adjustable component will receive an input command which will cause the motive component to move, modify, or otherwise change one or more aspects of one or more electronically adjustable features.

For example, in the case of an electronically adjustable component such as an active valve in a shock assembly, the motive component (e.g., solenoid, electric motor, stepper motor, or the like) will seat, unseat, or partially unseat a valve needle (or poppit, plug, etc.) with respect to a valve seat (or orifice, opening, pathway, etc.). Thus, in one embodiment, when the electronically adjustable valve receives an input command, the motive component will adjust the position of the valve needle with respect to the valve seat (which will cause the fluid pathway flow characteristics to change as the fluid pathway will be closed, opened, partially opened, or partially closed), thereby modifying one or more damping characteristics of the shock assembly.

The term "seat tube" refers to a portion of a bicycle frame to which a seatpost is attached (often by insertion of a portion of the seatpost into the seat tube).

A seatpost is a component, e.g., a tube or other geometric shaped member, that couples a saddle with the bicycle frame. In one embodiment, at least a portion of the bottom of the dropper seatpost is designed to be inserted into the seat tube of the bicycle frame and the top of the seatpost will include (or be coupled to) a saddle clamp assembly.

In general, a user adjusts the amount of seatpost sticking out of the seat tube to establish the vertical height of the saddle (e.g., how far the saddle is above the ground plane, above the pedals, etc.). Once the seatpost (with saddle) is adjusted within the seat tube to obtain the desired saddle height, a clamping member (or another retaining device) is used about the seat tube to fasten the seatpost within the seat tube.

The saddle clamp assembly is used to couple a bicycle saddle with the seatpost, in one embodiment, by clamping with the saddle rails of the saddle. The saddle clamp assembly allows a user to adjust the horizontal location of the saddle (e.g., toward the front or rear of the bicycle) and the pitch of the saddle (e.g., nose-up, nose-level, nose-down).

A dropper seatpost includes a lower post, an upper post, and an electronically adjustable valve assembly. In one embodiment, the lower post is a hollow or semi-hollow design. In one embodiment, the upper post is a hollow or semi-hollow design. In one embodiment, the lower post and the upper post are telescopically coupled such that the overall length of the dropper seatpost is modified by adjusting the telescoping extension and retraction.

In one embodiment, the telescoping extension and retraction capability of the upper and lower posts is controlled by the electronically adjustable valve assembly. In one embodiment, the electronically adjustable valve assembly is located in the lower post. In one embodiment, the electronically adjustable valve assembly is located in the upper post. In one embodiment, the electronically adjustable valve assembly could span the upper post and the lower post.

In one embodiment, the electronically adjustable valve assembly is an electronic rotary flow control valve assembly. In one embodiment, the electronically adjustable valve assembly also includes a mechanically actuated flow control valve capability.

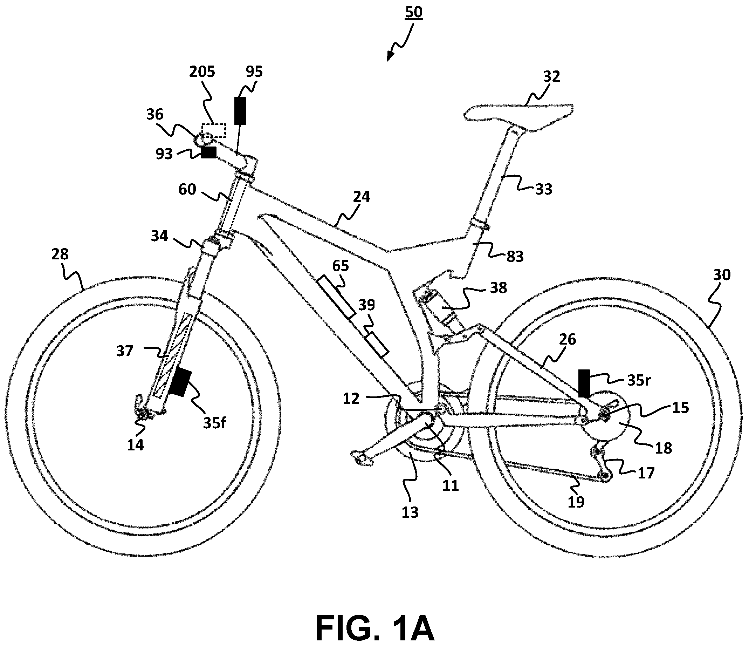

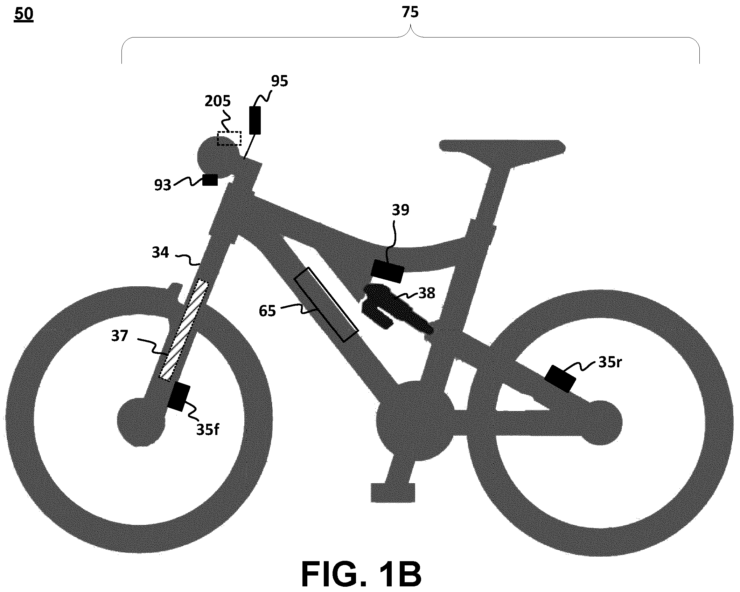

Referring now to Figure 1A, a perspective view of a bicycle 50 having a plurality of electronically actuated components is shown in accordance with an embodiment. Although a bicycle is used in the discussion. In one embodiment, the electronically actuated components 75 (shown in Figure 1B) could be used on another vehicle such as, but not limited to a road bike, a mountain bike, a gravel bike, an electric bike (e-bike), a hybrid bike, a scooter, a motorcycle, an ATV, a personal water craft (PWC), a four-wheeled vehicle, a snow mobile, a UTV such as a side-by-side, and the like. In one embodiment, the electronically actuated components 75 could be used on a suspension inclusive device such as, but not limited to an exoskeleton, a seat frame, a prosthetic, a suspended floor, and the like. However, in the following discussion, and for purposes of clarity, a bicycle is utilized as the example vehicle.

Thus, between the disclosed examples as provided in view of a bicycle 50, the disclosed embodiments can be used on electronically actuated components used by vehicles with wheels, skis, tracks, hulls, and/or with suspension inclusive devices such as prosthetic limbs, exoskeletons, and the like.

In one embodiment, bicycle 50 has a main frame 24 with a suspension system comprising a swing arm 26 that, in use, is able to move relative to the rest of main frame 24; this movement is permitted by, inter alia, rear shock assembly 38. The front fork 34 also provide a suspension function via a front shock assembly 37 in at least one fork leg; as such the bicycle 50 is a full suspension bicycle (such as an all-terrain bike (ATB), mountain bike, e-bike, etc.).

However, the embodiments described herein are not limited to use on full suspension bicycles. In particular, the term "suspension system" is intended to include vehicles having front suspension only, rear suspension only, seat suspension only, a combination of two or more different suspensions, and the like.

In one embodiment, swing arm 26 is pivotally attached to the main frame 24 at pivot point 12 which is located above the bottom bracket axis 11. Although pivot point 12 is shown in a specific location, it should be appreciated that pivot point 12 can be found at different distances from bottom bracket axis 11 depending upon the rear suspension configuration. The use of the specific pivot point 12 herein is provided merely for purposes of clarity. For example, in a hardtail bicycle embodiment, there would be no pivot point 12. In one embodiment of a hardtail bicycle, main frame 24 and swing arm 26 would be formed as a fixed frame. Bottom bracket axis 11 is the center of the pedal and front sprocket assembly 13. Bicycle 50 includes a front wheel 28, a rear wheel 30 and a seat 32. A seat 32 is connected to the main frame 24 via a dropper seatpost 300 in order to support a rider of the bicycle 50. In one embodiment, dropper seatpost 300 is used to adjustably retain and/or adjust the height of saddle 32 with respect to main frame 24, without modifying a yaw or a pitch position of saddle 32 with respect to main frame 24. In one embodiment, dropper seatpost 300 is used to adjustably retain and/or adjust the height of saddle 32 with respect to main frame 24, and may also modify one or both of the yaw and pitch positions of saddle 32 with respect to main frame 24

Front wheel 28 which is coupled with the front fork 34 via axle 14. The front fork 34 includes a crown and at least one fork leg. Above the crown, a steerer tube 60 passes through a portion of bicycle main frame 24 and attaches the fork 34 to the handlebar 200 (via a stem) allowing the rider to steer the bicycle 50. In one embodiment, at least one active valve damper 37 is integrated with fork 34.

The rear wheel 30 is connected to the swing arm 26 of the frame 22 at rear axle 15. A rear damping assembly (e.g., rear shock assembly 38) is positioned between the swing arm 26 and the frame 22 to provide resistance to the pivoting motion of the swing arm 26 about pivot point 12. Thus, the illustrated bicycle 50 includes a suspension member between swing arm 26 and the main frame 24 which operate to substantially reduce rear wheel 30 impact forces from being transmitted to the seat 32 (and thus the rider) of the bicycle 50.

In one embodiment, saddle 32 is connected to the main frame 24 via a dropper seatpost 300. In one embodiment, front shock assembly 37, rear shock assembly 38, dropper seatpost 300, handlebar 200 and/or the like include one or more active and/or semi-active damping components which are used to reduce an initial force generated by an event (e.g., imparted to a wheel of the vehicle from the surface on (or through) which the vehicle is traveling) to a lesser force as it is transferred to the rest of the vehicle and/or persons riding therein/thereon.

In one embodiment, bicycle 50 is driven by a chain 19 coupled with both front sprocket assembly 13 and rear sprocket 18. As the front sprocket assembly 13 is rotated about bottom bracket axis 11, a force is applied to chain 19 which transfers the energy from the front sprocket assembly 13 to rear sprocket 18. Chain tension device 17 provides a variable amount of tension on chain 19. The need for chain 19 length variation can be due to factors such as a number of different gears that may be on one or both of front sprocket assembly 13 and/or rear sprocket 18 and/or changes in chain stay length as the distance between bottom bracket axis 11 (where front sprocket assembly 13 attaches to main frame 24) and the rear axle 15 changes due to suspension articulation.

In one embodiment, bicycle 50 includes a number of electronically actuated components 75 (identified in Figure 1B) including one or more of: a switch 93, a user interface 205, an active valve damper(s) (e.g., rear shock assembly 38, front shock assembly 37), dropper seatpost 300, and the like, as well as other interactive components and features such as one or more of: a controller 39, a sensor(s) (e.g., sensor(s) 35f, 35r, and the like), a mobile device 95, a power source 65, smart components, and the like.

In one embodiment, sensor 35r is positioned on the swing arm 26 the rear axle 15 of bicycle 50. In one embodiment, sensor 35f is positioned in an unsprung location of front fork 34. Although a number of sensors are shown in accordance with one embodiment, in other embodiments, the same sensors (and or additional sensors) could be located in other locations, to sense and/or measure things such as temperature, voltage, current, resistance, noise, positions of one or more components of bicycle 50, such as dropper seatpost 300, pedals, derailer, chain, lever locations, etc.

Additional information for vehicle suspension systems, sensors, and their components as well as adjustment, modification, and/or replacement aspects including manually, semi-actively, semi-actively, and/or actively controlled aspects and wired or wireless control thereof is provided in U.S. Patents 8,838,335; 9,353,818; 9,682,604; 9,797,467; 10,036,443; 10,415,662 to which reference is specifically made.

In one embodiment, one or a plurality of component(s) of the bicycle 50 are also smart component(s). Examples of the smart component(s) can include one or more of the forks, wheels, rear shocks, front shocks, handlebars, seat posts, pedals, cranks, and the like. In one embodiment, the smart component(s) will include connective features that allow them to communicate wired or wirelessly with one or more of the electronically actuated components 75 (of Figure 1B), and/or any other smart component(s) within transmission range (thereby becoming connected components).

In one embodiment, data (including real-time data) is collected or provided from the smart component to the controller 39. Depending upon the connected component, data such as telemetry attributes to provide angle, orientation, velocity, acceleration, RPM, operating temperature, and the like, can be obtained.

Referring now to Figure 1B, a schematic side view of a bicycle 50 with focus on the one or more of the electronically actuated components 75 is shown in accordance with an embodiment.

In one embodiment, one or more of the electronically actuated components 75 include one or more of: a switch 93, a user interface 205, an active valve damper(s) (e.g., rear shock assembly 38, front shock assembly 37), dropper seatpost 300, and the like, as well as other interactive components and features such as one or more of: a controller 39, one or more sensors (e.g., sensor 35f, 35r, and the like), hereinafter "sensor 35", mobile device 95, power source 65, smart components, and the like.

In one embodiment, mobile device 95 is mounted to handlebar 200 of bicycle 50. Although mobile device 95 is shown mounted to handlebar 200, it should be appreciated that the mobile device 95 could be in a rider's backpack, pocket, or the like. In general, mobile device 95 is a smart device such as a mobile phone, tablet, a smart phone, a tablet, a smart watch, a piece of smart jewelry, smart glasses, or other user portable device(s) having wireless connectivity. Mobile device 95 is capable of broadcasting and receiving via at least one network, such as, but not limited to, WiFi, Cellular, Bluetooth, NFC, and the like. In one embodiment, mobile device 95 includes one or more of a display, a processor, memory, a location or position system (such as a global positioning system (GPS), local positioning system, or the like), camera, and one or more sensors such as audio, visual, motion, acceleration, altitude, and the like.

In one embodiment, switch 93 is mounted to handlebar 200 of bicycle 50. In one embodiment, switch 93 is a positional switch used in conjunction with one or more of the electronically actuated components 75.

In one embodiment, switch 93 is a multi-positional switch, an upshift/downshift type of switch, a button type switch, or the like. For example, switch 93 would be a 2-position switch, a 3-position switch, a switch that can cycle through a number of different modes (similar to a gear shift), or the like. Although switch 93 is shown mounted to handlebar 200, it should be appreciated that switch 93 could be mounted in a different location on the vehicle, on a mount coupled to the vehicle, or the like. In one embodiment, the location of switch 93 is modifiable and is located on the vehicle based on a user's preference.

In general, sensor 35 could be a single sensor (such as an accelerometer) or a combination of sensor types. Sensor 35 is used for sensing characteristics (or changes to characteristics) such as terrain, environment, temperature, vehicle speed, vehicle pitch, vehicle roll, vehicle yaw, component activity, or the like. It is understood that the one or more sensors may be imbedded, moved, mounted, or the like, in any suitable configuration and allowing for any suitable range of adjustment as may be desirable.

In one embodiment, sensor 35 is a force or acceleration transducer (e.g., strain gage, Wheatstone bridge, accelerometer, hydraulic, interferometer based, optical, thermal or any suitable combination thereof). Further, the sensor 35 may utilize solid state electronics, electro-mechanical principles or MEMS, or any other suitable mechanisms.

Although a number of sensors are shown in Figures 1A and 1B, it should be appreciated that there may be only a single sensor or two or more sensors in operation. Moreover, in one embodiment, mobile device 95 is can be used as a sensor.

In general, the one or more sensors may be attached to the swing arm 26 directly, to any link thereof, to an intermediate mounting member, to front fork 34, to rear shock assembly 38, seat 32, handlebar 200, or to any other portion or portions of the bicycle 50 as may be useful, available, or the like. In one embodiment, one or more sensors may be attached to another vehicle, another rider, user, stationary object, and the like. For example, in one embodiment, the controller may receive sensor information from a sensor located on a lead vehicle, another vehicle in the group with a larger power source and thus a greater sensor array, capacity, capability, etc.

In one embodiment, one or more sensors and valve actuators (e.g. electric solenoid or linear motor type-note that a rotary motor may also be used with a rotary actuated valve), suspension components, suspension component controller(s) and/or data processing system(s), and the like may be coupled to and/or integrated with the vehicle structure, such as disclosed in U.S. Pat. Nos. 7,484,603; 8,838,335; 8,955,653; 9,303,712; 10,036,443; 10,060,499; 10,443,671; and 10,737,546 to which reference is specifically made. Further, sensors and valves, or principles, of patents and other documents incorporated herein by reference, may be integrated one or more embodiments hereof, individually or in combination.

In one embodiment, the sensor(s) 35 provides the obtained sensor data to controller 39. In one embodiment, controller 39 uses the sensor data to determine one or more adjustments of one or more of the electronically actuated components.

In one embodiment, controller 39 monitors the sensor(s) 35 for sensor input (and/or the location and terrain data, etc.) and determines the one or more adjustments in a matter of milliseconds after receiving the sensor data. For example, in one embodiment, sensors on the fork, rear axle, and/or main frame read bump input at the wheel and send the obtained sensor data to the controller 39. Thus, by placing sensors on the frame and/or in unsprung location for both wheels, the controller 39 is able to processes data from the terrain to constantly adjust the suspension for maximum efficiency and control.

In one embodiment, controller 39 provides the one or more adjustments of one or more of the electronically actuated components as input to one or more of the electronically actuated components which then perform the one or more adjustments.

In one embodiment, location data from a position system (such as location information obtained by mobile device 95, by a navigation system, by broadcasting beacons, and the like) is used in conjunction with terrain data by the controller 39 to determine probability of obstacles (e.g., to provide a priori knowledge) which is used to optimize the suspension configuration. For example, location information and a terrain database (or the like) is used to establish the bicycle's current location and the terrain about the location (e.g., on a bumpy patch of trail, etc.).

In one embodiment, controller 39 and/or any other controllers utilized by one or more components described herein are removably coupled with the component and as such, may be removeable as a unit. In one embodiment, the controller 39 (or the like), once removed, can be coupled to a power source for charging purposes, if needed. Additionally, in one embodiment, the removed controller can, for example, download software or firmware upgrades. As a result, the rider/user obtains the advantage of having a controller which has the "latest and greatest" features available to the rider/user.

Although controller 39 is shown in a number of locations in Figures 1A and 1B, it should be appreciated that in other embodiments, controller 39 could be located in other locations. For example, the controller could be located on the side of the frame, at the handlebars, under the saddle, carried by the rider if it is wireless, etc. The use of the mounting locations shown in Figures 1A and 1B are indicative of one embodiment, which is provided for purposes of clarity.

Similarly, although shown in certain locations in Figures 1A and 1B, in accordance with one embodiment, in other embodiments, one, some, or all of the components shown in Figures 1A and 1B could be located in other locations. For example, one, some, or all of the components could be located on the sides of components, at the handlebars, under the saddle, carried by the rider if it is wireless, located on a mount attached to a portion of the bicycle 50, etc. Thus, the use of the locations of components as shown in Figures 1A and 1B are indicative of one embodiment, which is provided for purposes of clarity.

### Adjustable Shock Assembly

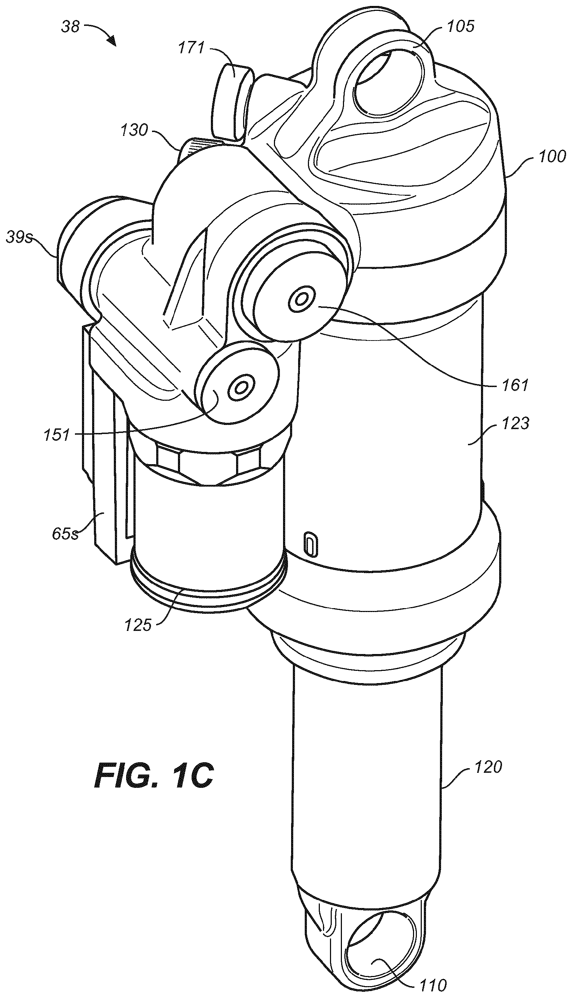

With reference now to Figure 1C, a perspective view of an adjustable shock assembly is shown in accordance with one embodiment. In one embodiment, the adjustable shock assembly is a stand-alone fluid damper assembly, a coil sprung adjustable shock assembly, an air sprung fluid damper assembly, or the like. In its basic form, the adjustable shock assembly controls the speed of movement of a piston shaft by metering incompressible fluid from one side of the main piston to the other. In one embodiment, such as during a compression stroke, the adjustable shock assembly will also meter incompressible fluid from the main chamber to the reservoir 125, to account for the addition of the piston shaft volume as the piston shaft (coupled with the main piston) moves into the compression side of the main chamber and reduces the overall volume of the compression side of the main chamber. In one embodiment, such as during a rebound stroke, the adjustable shock assembly will also meter incompressible fluid from the reservoir 125 back to the main chamber to account for the overall volume change of the main chamber as the piston shaft (coupled with the main piston) moves out of the compression side of the main chamber.

In one embodiment, the adjustable shock assembly is the rear shock assembly 38. In another embodiment, the adjustable shock assembly is the front shock assembly 37. In one embodiment, both the front shock assembly 37 and the rear shock assembly 38 are adjustable shock assemblies. In one embodiment, the adjustable shock assembly will include a mechanical spring (e.g., a helically wound spring that surrounds or is mounted in parallel with the body of the adjustable shock assembly). In one embodiment, the adjustable shock assembly will include an air spring. In one embodiment, the adjustable shock assembly will include both a mechanical spring and an air spring.

In the following discussion, the operation of the adjustable shock assembly (including any electronically actuated aspects) is described in conjunction with the rear shock assembly 38. However, this is done for purposes of clarity. It should be appreciated that in some embodiments, some, most, or all, of the discussion of the adjustable shock assembly could be applied to the front shock assembly 37, the dropper seatpost 300, an exoskeleton, a seat frame of a vehicle, an adjustable shock assembly in a prosthetic appliance, or any other devices, vehicles, and the like, where a shock assembly may be utilized.

In one embodiment, rear shock assembly 38 includes a top cap portion 100, shaft end eyelet 105, lower eyelet 110, damper body 120, air sleeve 123, and reservoir 125. In one embodiment reservoir 125 is an external or piggyback type of reservoir. In another embodiment, reservoir 125 may be an internal reservoir. In one embodiment, the use of an external reservoir is provided merely for purposes of clarity in accordance with an embodiment. In one embodiment, rear shock assembly 38 may not include an external reservoir.

In one embodiment, rear shock assembly 38 includes one or more adjustable features such as, but not limited to, a pneumatic valve 130 (e.g., a Shrader valve, Presta valve, Dunlop valve, or the like), an adjustable active valve assembly 151, a compression adjuster 161, and an adjustable rebound valve assembly 171. In one embodiment, rear shock assembly 38 includes each of the pneumatic valve 130, the adjustable active valve assembly 151, the compression adjuster 161, and the adjustable rebound valve assembly 171.

In one embodiment, the adjustable shock assembly may include fewer components, e.g., rear shock assembly 38 may not include most, some, or one of the top cap portion 100, shaft end eyelet 105, damper body 120, reservoir 125, pneumatic valve 130, adjustable active valve assembly 151, compression adjuster 161, and adjustable rebound valve assembly 171.

As described herein, the electronically adjustable component such as the active valve in the adjustable shock assembly, includes a motive component (e.g., solenoid, electric motor, stepper motor, or the like) to seat, unseat, or partially unseat a valve needle (or poppit, plug, etc.) with respect to a valve seat (or orifice, opening, pathway, etc.). Thus, in one embodiment, when one or more of the electronically adjustable valve assemblies (e.g., adjustable active valve assembly 151, compression adjuster 161, adjustable rebound valve assembly 171, and or any other active valves) of rear shock assembly 38 receive an input command, the input will cause a solenoid, electric motor, poppet, or the like to adjust one or more characteristics of one or more electronically adjustable valve(s) of the rear shock assembly 38.

In one embodiment, the input is received wired or wirelessly using communication devices and protocols such as those described in the communications discussion herein. For purposes of clarity, the communications discussion is not repeated herein. Instead, the entirety of any communications discussions provided herein is incorporated by reference for purposes of clarity.

In one embodiment, the input is received from one or more of the controller(s) and component(s), such as, but not limited to controller 39, a controller coupled with another active shock assembly, another vehicles' controller, controller 39h of user interface 205, controller 39d of dropper seatpost 300, mobile device 95, user interface 205, another active shock assembly (e.g., front shock assembly 37), dropper seatpost 300, switch 93, sensor(s) 35, or the like.

In one embodiment, rear shock assembly 38 has a controller 39s coupled therewith. In one embodiment, controller 39s is similar in operation to the controller 39 described herein. In one embodiment, the input received by one or more of the electronically adjustable valve assemblies of rear shock assembly 38 is received from controller 39s. In one embodiment, the input is received from one or more of the controller(s) and component(s), such as, but not limited to controller 39, controller 39s, a controller coupled with another active shock assembly, a controller and/or component associated with another vehicle and/or party, controller 39h of user interface 205, controller 39d of dropper seatpost 300, mobile device 95, user interface 205, another active shock assembly (e.g., front shock assembly 37), dropper seatpost 300, switch 93, sensor(s) 35, or the like.

In one embodiment, the motive component (e.g., solenoid, electric motor, stepper motor, or the like) of the electronically adjustable component receives power from a power source such as those described in the power source discussion herein. In one embodiment, the power source (such as power source 65, power source 65h, power source 65d, or the like) is coupled with the electronically adjustable component of rear shock assembly 38.

In one embodiment, rear shock assembly 38 has power source 65s coupled therewith. In one embodiment, power source 65s is similar to those described in the power source discussion herein, and as such, the type, operation, capabilities, removability, and the like of power source 65s is not repeated herein. Instead, the entirety of any power source discussion provided herein is incorporated by reference for purposes of clarity.

In one embodiment, the power source 65s is integrated with the electronically adjustable component. In one embodiment, power source 65s is located separate from the electronically adjustable component. In one embodiment, rear shock assembly 38 includes both controller 39s and power source 65s. In one embodiment, the power source 65s is integrated with the controller 39s. In one embodiment, power source 65s is located separate from controller 39s.

In one embodiment, rear shock assembly 38 may include one or more sensors (such as sensors 35), in addition to controller 39s and/or power source 65s. In one embodiment, rear shock assembly 38 may include one or more sensors (such as sensors 35), in addition to controller 39s and power source 65s resulting in a fully self-contained active rear shock assembly 38.

Although components of Figure 1C are shown in given locations in accordance with one embodiment, in other embodiments, one, some, or all of the components shown in Figure 1C could be located in other locations, one or more components could be separated into two or more pieces and dispersed, etc. The use of the locations of the components as shown in Figure 1C are indicative of one embodiment, which is provided for purposes of clarity.

### Dropper Seatpost User Interface

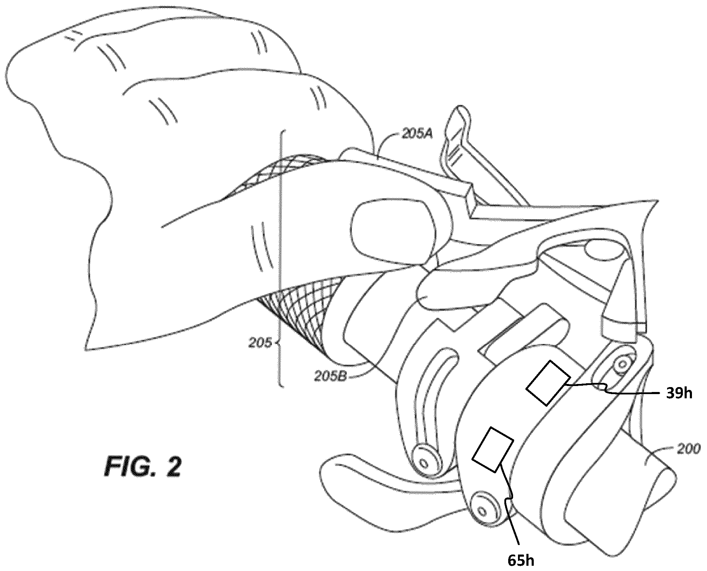

Referring now to Figure 2, a perspective view of handlebar 200 having the user interface 205 coupled therewith is shown in accordance with an embodiment. In one embodiment, the user interface 205 is mounted on handlebar 200. In one embodiment, user interface 205 is coupled with handlebar 200 via a clip or other retaining device.

In one embodiment, user interface 205 includes a power source 65h. In one embodiment, power source 65h is similar to that described in the power source discussion herein, and as such, the type, operation, capabilities, removability, and the like of power source 65h is not repeated herein. Instead, the entirety of any power source discussion provided herein is incorporated by reference for purposes of clarity.

In one embodiment, user interface 205 includes a controller 39h. In one embodiment, controller 39h is similar in operation to the controller 39 described herein.

In one embodiment, user interface 205 includes both a power source 65h and a controller 39h.

In one embodiment, user interface 205 communicates seatpost height instructions for the dropper seatpost 300 to electronically adjustable valve assembly 333 of dropper seatpost 300 via a wired connection, via a wireless connection, or via a combination of wired and wireless connections.

In one embodiment, user interface 205 includes a wireless transmitter/receiver (such as controller 39h) and is wirelessly coupled with electronically adjustable valve assembly 333. In one embodiment, user interface 205 communicates wired or wirelessly using communication devices and protocols such as those described in the communications discussion herein. For purposes of clarity, the communications discussion is not repeated herein. Instead, the entirety of any communications discussions provided herein is incorporated by reference for purposes of clarity.

Although the user interface 205 is shown coupled with handlebar 200, in another embodiment, the user interface 205 could be located on another portion of the main frame 24, on a mount coupled with the vehicle, worn as a smart device, carried by the rider, as an app on mobile device 95, or the like.

In one embodiment, user interface 205 includes at least one control, such as the first user interface 205A and may include a second user interface 205B, it should be understood that in an embodiment, there may be only a single control, or in an embodiment there may be a set of controls. In one embodiment, when the cyclist interacts the user interface 205, a signal is sent from the user interface 205 to the electronically adjustable valve assembly 333. As described in detail herein, the signal causes the actuation of an active valve (e.g., such as a rotation of a rotary flow control valve) within the electronically adjustable valve assembly 333. The actuation of the active valve causes the active valve to open and/or close, thereby controlling the fluid flow between two or more fluid volumes within the dropper seatpost 300. This opening and/or closing of the active valve allows the dropper seatpost 300 to drop to a lower saddle ride height, or return to a previous saddle ride height as discussed herein.

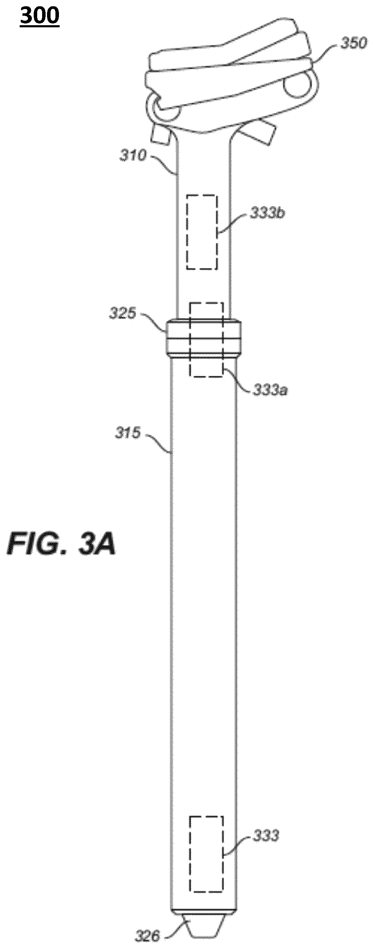

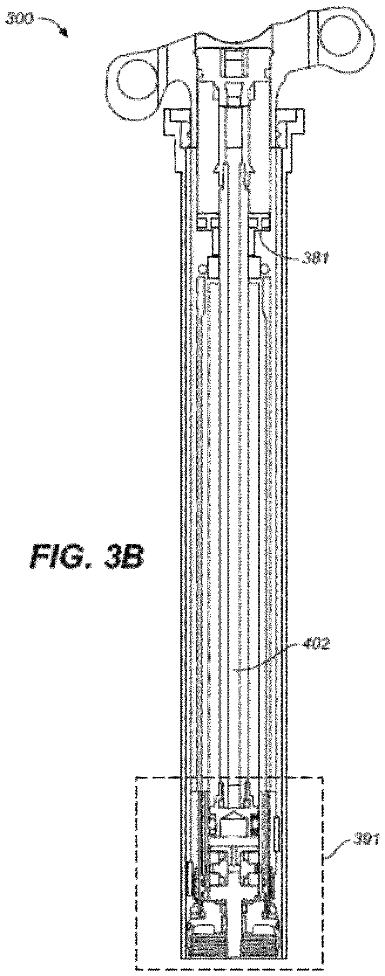

Although components of Figure 2 are shown in given locations in accordance with one embodiment, in other embodiments, one, some, or all of the components shown in Figures 3A and 3B could be located in other locations, one or more components could be separated into two or more pieces and dispersed, etc. The use of the locations of the components as shown in Figures 3A and 3B are indicative of one embodiment, which is provided for purposes of clarity.

### Dropper Seatpost

With reference now to Figure 3A, a perspective view of a dropper seatpost 300 coupled with a saddle clamp assembly 350 is shown in accordance with an embodiment. In one embodiment, the dropper seatpost 300 includes an upper post 310, a lower post 315, an electronically adjustable valve assembly 333 (including a rotary flow control valve or the like) and a bottom 326.

The upper post 310 and the lower post 315 are telescopically coupled together to form the seatpost portion of the dropper seatpost 300. In one embodiment, the upper post 310 includes the saddle clamp assembly 350 at a top thereof (e.g., at the end (or close to the end) of the upper post 310 opposite the end of the upper post telescopically coupled with the lower post 315). In one embodiment, the lower post 315 is inserted into and then fixedly coupleable with the seat tube 83 of main frame 24.

In one embodiment, the electronically adjustable valve assembly 333 controls the telescoping capability of the upper post 310 and lower post 315 configuration, such that a user can operate a control lever (e.g., user interface 205 shown in Figure 2) to "drop" the dropper seatpost 300 to a lower setting (e.g., the saddle clamp assembly 350 is approximately at the top of the lower post 315), and then use the same control lever to "return" the dropper seatpost 300 to its preset ride height. This two-position capability allows a rider to have a preferred saddle ride height and also a lowered saddle height for traversing downhills, bumpy terrain, while standing on the pedals, or the like. Although two positions are discussed, the dropper seatpost 300 could be adjustable to any number of different ride height positions, the use of two positions is discussed herein for purposes of clarity.

In one embodiment, the amount that dropper seatpost 300 extending from the main frame 24 can be adjusted. In general, dropper seatpost 300 may be made of various materials, such as, but not limited to: steel, aluminum, titanium, carbon fiber, and aluminum wrapped in carbon fiber.

In one embodiment, the electronically adjustable valve assembly 333 includes a wired communication and actuation capability. For example, in one embodiment, the electronically adjustable valve assembly 333 is used as an actuator in a dropper seatpost 300 where the drop function is actuated via a wired connection between the electronically adjustable valve assembly 333 and a user interface 205 (and/or mobile device 95, switch 93, controller 39, and the like).

In one embodiment, the electronically adjustable valve assembly 333 includes a wireless communication and actuation capability. For example, in one embodiment, the electronically adjustable valve assembly 333 is used as an actuator in a dropper seatpost 300 where the drop function is actuated via a wireless remote connection between the user interface 205 (and/or mobile device 95, switch 93, controller 39, and the like) and a motive component used to power a flow control valve of the electronically adjustable valve assembly 333.

In one embodiment, the dropper seatpost 300 doesn't move under electrical power, but instead, the opening or closing of the electronically adjustable valve assembly 333 used in the dropper seatpost 300 is what receives the signal and utilizes the electrical power. The actual compression of the dropper seatpost 300 is caused by the rider's body weight on the saddle and the return of the dropper seatpost 300 is provided by a spring return force (or the like).

In one embodiment, using wireless communication devices and protocols such as those described in the communications discussion herein, which for purposes of clarity is not repeated, but instead the entirety of any communications discussions provided herein is incorporated by reference, the wirelessly electronically adjustable valve assembly 333 used for the dropper seatpost 300 will respond to the remote input as fast or faster than a cable actuated dropper seatpost 300. In other words, in one embodiment, the time lag, from the signal initiation by the rider using the wireless user interface until the wireless command is received and acted on by the electronically adjustable valve assembly causing the response in the dropper seatpost 300, is smaller than a user perceptible delay.

In one embodiment, using wired communication protocol such as, but not limited to, those disclosed herein, the wired electronically adjustable valve assembly 333 used for the dropper seatpost 300 will respond to the input from the user interface 205 (and/or mobile device 95, switch 93, controller 39, and the like) as fast or faster than a cable actuated dropper seatpost 300

In one embodiment, the electronically adjustable valve assembly 333 uses small and light componentry with a focus on both the minimizing of power requirements resulting in a long battery life and the minimizing of the weight/rotational inertia of the electronically adjustable valve assembly. In one embodiment, such as in a dropper seatpost 300, the packaging envelope for the electronically adjustable valve assembly should be smaller than the diameter of the seat tube 83 within which the dropper seatpost 300 is to be installed.

In one embodiment, the operation of the electronically adjustable valve assembly 333 is provided in the context of a dropper seatpost 300. However, in another embodiment, the electronically adjustable valve assembly 333 may be used in other active valve suspensions and components, to include other hydraulic applications such as a fork, shock, brake, etc.

Embodiments of different active valve suspension and components that may utilize the electronically adjustable valve assembly are disclosed in U.S. Patents 8,838,335; 9,353,818; 9,682,604; 9,797,467; 10,036,443; 10,415,662 for example.

In one embodiment, some, part, or all of the electronically adjustable valve assembly 333 is located in the lower post. In another embodiment, some, part, or all of the electronically adjustable valve assembly 333 (shown as 333b for purposes of clarity) is located in the upper post. In one embodiment, some, part, or all of the electronically adjustable valve assembly 333 (shown as 333a for purposes of clarity) could span the upper post and the lower post.

In one embodiment, e.g., a gravel or road bicycle, the dropper seatpost 300 travel does not need to be as long and as such, the lower post 315 of the dropper seatpost 300 can be trimmed or otherwise shortened. Therefore, in one embodiment, the location of the electronically adjustable valve assembly 333 could be placed further toward the saddle 32 within the dropper seatpost 300, such that an amount of material (e.g., a trimmable portion) could be removed from the outer post of the dropper seatpost 300. In one embodiment, the trimmable option may also be important for purposes of weight reduction, a better fit between dropper seatpost 300 and seat tube 83 (and/or main frame 24), user preference, and the like.

Although Figure 3A shows a number of electronically adjustable valve assembly 333 locations, in general, there is only one electronically adjustable valve assembly 333 and the shown locations of electronically adjustable valve assembly (e.g., 333, 333a, 333b, etc.) are indicative of a few of the possible placement locations for electronically adjustable valve assembly 333.

In one embodiment, seat tube collar 325 is the highest portion of the lower post 315 and is indicative of the lowest possible setting for the dropper seatpost 300 when it is installed into the main frame 24 seat tube 83. That is, seat tube collar 325 identifies a region of dropper seatpost 300 wherein the dropper seatpost 300 generally transitions between the portion thereof that is inside the main frame 24 and the portion of the dropper seatpost 300 that moves with respect to the main frame.

In one embodiment, the lower post 315 includes a top opening (e.g., approximately at seat tube collar 325) to receive the upper post 310 and a tubular sidewall axially extending between the top opening and the bottom 326 to form the lower post 315, the outer diameter (OD) of the tubular sidewall of the lower post 315 is smaller than an inner diameter (ID) of a seat tube 83 of main frame 24, the lower post 315 for insertion into the seat tube 83. In one embodiment, bottom 326 is the lowest portion of lower post 315 relative to when lower post 315 is within seat tube 83. For example, lower post 315 is inserted into the seat tube 83 and is fixed within the main frame 24 such that it cannot move with respect to the main frame 24.

In one embodiment, upper post 310 telescopically slides with respect to lower post 315. In one embodiment, the upper post 310 has an OD smaller than the ID of the lower post 315, such that a portion of the upper post 310 can telescopically slide within the lower post 315. In one embodiment, the upper post 310 has an ID larger than an OD of the lower post 315, such that a portion of the lower post 315 can telescopically slide within the upper post 310.

In one embodiment, upper post 310 and at least part of saddle clamp assembly 350 are formed as a single component. In another embodiment, upper post 310 and saddle clamp assembly 350 consist of two or more distinct and/or different components.

In one embodiment, when movement of the saddle is desired, (e.g., due to hills, terrain, aerodynamics, speed, etc.), a rider will cause the dropper seatpost 300 to lower by triggering user interface 205 while the rider also depresses the saddle. In one embodiment, the user interface 205 will send a wireless signal to electronically adjustable valve assembly 333 causing rotary flow control valve 420 to open a flow pathway such that the dropper seatpost 300 will be capable of being moved down or up. In one embodiment, dropper seatpost 300 has an air spring and use the rider's weight to move the saddle down, and will only raise the saddle back to the initial position when the electronically adjustable valve assembly 333 is activated (e.g., wirelessly via user interface 205). Although an air spring is disclosed, in other embodiments, the dropper seatpost 300 could use a mechanical spring, a combination of an air spring and a mechanical spring, and the like. The use of the air spring is provided herein for purposes of clarity when describing an embodiment.

In one embodiment, dropper seatpost 300 is "micro-adjustable". There are two types of micro-adjustable seatposts: (1) seatposts that can be continuously adjusted to an infinite number of positions; and (2) seatposts that can only be adjusted to a predetermined (preprogrammed) number of positions. For example, with regard to dropper seatposts that can only be adjusted to a preprogrammed number of positions, the dropper seatpost adjustment positions may be that of the following three positions: up; middle; and down. Generally, the rider prefers that the dropper seatpost 300 be in the "up" position during a ride over flat terrain, a road surface, or pedaling up small hills on a road surface. The rider generally prefers that the dropper seatpost 300 be in the "middle" position when the rider still wants a small amount of power through pedaling but yet would still like the saddle to be at least partially out of the way. This situation may occur while riding down a gentle hill or when the rider anticipates having to climb a hill immediately after a short decent. The rider generally prefers that the dropper seatpost 300 be in the "down" position when the rider is standing up to provide the most amount of power through pedaling and wants the saddle to be at its lowest possible out of the way setting, when the rider is descending a hill, traversing bumpy terrain (e.g., bunny hoping, using flexed legs to absorb bumps, pump track type scenarios, etc.), or the like. For example, the lowest saddle position would be valuable during a decent where the rider would be positioned rearward of the saddle thereby moving the center of gravity lower and/or rearward resulting in a more stable and safer decent.

Additional details regarding the operation of a dropper seatpost 300 can be found in US patent 9,422,018 to which reference is specifically made.

Although components of Figure 3A are shown in given locations in accordance with one embodiment, in other embodiments, one, some, or all of the components shown in Figure 3A could be located in other locations, one or more components could be separated into two or more pieces and dispersed, etc. The use of the locations of the components as shown in Figure 3A are indicative of one embodiment, which is provided for purposes of clarity.

Referring now to Figure 3B, a cutaway view of the electronically adjustable valve assembly 333 in the dropper seatpost 300 of Figure 3A is shown in accordance with an embodiment. For purposes of clarity, a discussion of the components that were visible and/or described in Figure 3A will not be repeated herein, but are incorporated by the discussion of Figure 3A in their entirety.

In Figure 3B, dropper seatpost 300 includes IFP (Internal Floating Piston) 381, translating shaft 402, and cutaway sectional view 391. In one embodiment, the IFP 381 charge allows a gas spring to be used to extend the dropper seatpost 300. In cutaway sectional view 391, the electronically adjustable valve assembly 333 is shown at the bottom 326 of dropper seatpost 300. Is should be appreciated that the cross section is used to show one embodiment of the configuration of dropper seatpost 300 including the location of IFP 381 and the electronically adjustable valve assembly 333. However, as provided in further discussion herein, in another embodiment, one or more details of electronically adjustable valve assembly 333 including different possible installation locations, variations, components, operational characteristics and the like are possible. The use of the embodiment of Figure 3B is provided as an example of one embodiment and used herein for purposes of clarity.

### Electronically adjustable valve assembly

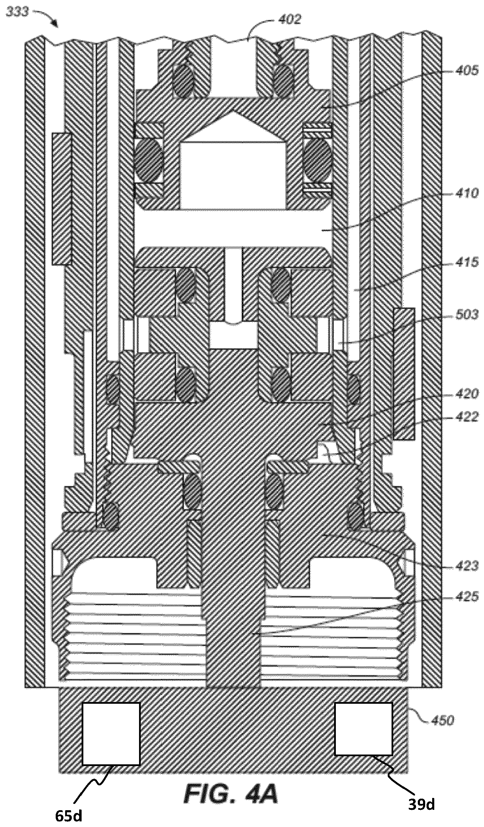

With reference now to Figure 4A, a cutaway sectional view 391 (as identified in Figure 3B) of a portion of the dropper seatpost 300 including the electronically adjustable valve assembly 333 is shown in accordance with an embodiment. In one embodiment, electronically adjustable valve assembly 333 includes a piston 405 connected to a translating shaft 402, a first chamber or inner chamber which is a fluid chamber pressurized by a rider's weight on the saddle 32. For purposes of clarity, the first chamber is referred to hereinafter as an inner fluid chamber 410 (or inner pressure tube). In one embodiment, electronically adjustable valve assembly 333 also includes a second chamber having an annular region about inner fluid chamber 410 which is pressurized on extension and by the IFP 381. For purposes of clarity, the second chamber is referred to hereinafter as an outer fluid chamber 415 (or outer pressure tube). In one embodiment, the actions of the two chambers are reversed, e.g., the inner fluid chamber 410 is pressurized on extension and by the IFP 381 and the outer fluid chamber 415 is pressurized by the rider's weight on the saddle 32.

In one embodiment, electronically adjustable valve assembly 333 is an electronically adjustable valve assembly which includes a rotary flow control valve 420 with a drive feature 425 which is coupled to a motive component (e.g., a motor, actuator, solenoid, or the like- referred to hereinafter as motor 450). In one embodiment, the input from motor 450 into drive feature 425 will change the rotary position of rotary flow control valve 420.

In one embodiment, motor 450 is a brushed DC motor with a gearbox. In one embodiment, motor 450 is a stepper motor, brushless motor, coreless motor, or the like. In one embodiment, a control process is employed which controls the motor 450 ensuring it turn the rotary flow control valve 420 the proper amount. In one embodiment, the control process does not require the use of visual indices, motion measurement tools, or the like.

In one embodiment, the control process utilizes the wireless radio (at the user interface 205), a microcontroller and a motor controller (in one embodiment, both the microcontroller and the motor controller are located other than user interface 205 and closer (if not physically coupled with) motor 450). In one embodiment, the wireless radio senses an actuation signal from the trigger unit (e.g., the user pushing a button or the like on user interface 205) which, in one embodiment, is mounted at handlebar 200, when the user desires for the seatpost to change state. When the actuation signal is received from the user interface 205 to the microcontroller, the microcontroller sends a signal to the motor controller. In one embodiment, the motor controller allows power from the power source to be applied to the DC motor 450. In one embodiment, full voltage from the power source is supplied to the motor 450. In one embodiment, full voltage from the power source is supplied such that the motor 450 is spun as quickly as possible. In one embodiment, less than full voltage from the power source is supplied to the motor 450. In one embodiment, one or more components of the control process (e.g., microcontroller, motor controller, or the like) then monitor for a condition that occurs during the operation of motor 450 (e.g., current, proxy current, time, resistance, voltage, temperature, other sensors input, or the like) that satisfies a predetermined criteria. When the condition is met, the power to the motor 450 is removed.

For example, in one embodiment, as power is provided to the motor, the motor controller senses the current provided to the motor 450 using a circuit integrated into the motor controller. In general, the current (or other measurable aspect) varies over time (e.g., initially spiking to get the motor turning, then dropping while the valve opens, then spiking again when the valve is open and hits the hard stop). In one embodiment, the operating current provided to the motor 450 is compared to one or more pre-determined values (or current thresholds) stored in the memory of the microcontroller. In one embodiment, when the sensed current meets the predetermined threshold (e.g., a current threshold that represents motor stall), the microcontroller sends a signal to the motor controller to shut off the power to the motor 450. In one embodiment, this would complete an "open" portion of the control strategy (e.g., opening the rotary control flow valve 420). In one embodiment, as long as the user depresses the button on user interface 205, this is all that occurs. That is, power is not required to keep the rotary control flow valve 420 open.

In one embodiment, when the user releases the button on user interface 205, the reverse operation occurs to close the rotary control flow valve 420. That is, the wireless radio senses that the button is no longer being pushed (or the like) and sends a broadcast to the microcontroller. The microcontroller receives the broadcast and sends a signal to the motor controller to once again allow power to be provided to the motor 450, (however, in one embodiment, it is provided in an opposite polarity from that provided in the rotary control flow valve 420 open operation to cause the motor 450 to rotate in the opposite direction). Once again, the current (or other measurable aspect) is sensed until the current threshold criteria is met, at which point the microcontroller sends a signal to the motor controller to shut off the power to the motor 450. In one embodiment, this would complete the "close" portion of the control strategy (e.g., closing the rotary control flow valve 420). Once again, power is not required to hold the rotary control flow valve 420 closed.

In one embodiment, the use of the control process described herein to monitor and analyze the sensed current greatly reduces the complexity associated with conventional electronically-actuated seatposts. For example, in one embodiment of a wired configuration (as opposed to a wireless embodiment) only two wires are required to be coupled to motor 450. In general, the two wires provide the power to motor 450, (e.g., completing a circuit between the power source and motor 450). In one embodiment, the microcontroller and/or motor controller would also be included in the circuit to control the flow of power from the power source to the motor 450.

In one embodiment, the current (or other measurable aspect) can be sensed at any desired location of the circuit. For example, in various embodiments, the current may be sensed at, but not limited to, any of the following locations, at or very near motor 450, at a location remote from motor 450, at the same location as the power source for motor 450, at a control unit (such as microcontroller and/or motor controller) which controls motor 450, at a control unit which controls other features on the vehicle (e.g., in one embodiment, the control unit is not required to control motor 450), and the like.

In one embodiment, there is a cutout 422 in a portion of the rotary flow control valve 420 that interfaces with the lug 423 to create a hard stop (or bump stop, or the like). In various other embodiment, other aspects, features, or the like maybe used as the stopping feature of the rotation of the rotary flow control valve 420 (such as open, closed, or the like) which would cause a current threshold to be reached. In one embodiment, the hard stop is used to control the endpoint or endpoints of motor 450 with respect to moving/translating/rotating of some portion of dropper seatpost 300. Once the hard stop has restricted further moving/translating/rotating of a portion of the dropper seatpost 300, the controller will sense a corresponding change in current (e.g., a current spike, a current drop, or other change in current) through motor 450. In one embodiment, based upon sensing the current change, the controller stops power from being provided to motor 450, or otherwise alters the power received by motor 450.

In one embodiment, instead of (or in addition to) the measuring and/or monitoring of a current threshold of the motor to determine the rotation of the rotary valve has reached a stopping point, other measuring devices such as timers, filters, and the like, may be used to measure time, resistance, voltage, thermometer, other sensors, or the like. Here again, the control process is looking for a condition (e.g., current, proxy current, time, resistance, voltage, temperature, other sensors input, or the like) supplied to the actuating unit (e.g., motor 450) that satisfies a predetermined criteria.

For example, if the motor 450 rotational rate for a given power is known, and the amount of desired rotation of the rotary flow control valve 420 is also known, a timer or the like could be used to control the time the power is supplied to motor 450. For example, if motor 450 spins at a rate of 200 rpm and the rotary valve needs to be rotated 180 degrees, then the timer would let the motor 450 operate for 0.15 seconds. In one embodiment, the timer and/or filters disclosed herein could also be used as back-up or confirmation settings to ensure against faults/transients such as where the stall current threshold is reached before the valve is completely open or completely closed. Thus, using any and/or all of these methods, there is no need to measure the position of the motor 450 directly.

As a significant advantage over conventional approaches, the various current sensing embodiments, are not required to use visual indices, motion measurement tools, or the like, to determine that motor 450 has completed a desired movement/translation/rotation of some portion of dropper seatpost 300. As a result, embodiments do not require the additional complex features, additional wires (e.g., additional control wires between motor 450 and a controller dedicated and/or used to control motor 450). Instead, one embodiment is able to control motor 450 using the single wire which provides power to motor 450, or otherwise altering the power received by motor 450. Additionally, as physical space tends to be constrained in various vehicles, such as, for example, in bicycle 50, fewer wires and components will occupy far less physical space than is required by conventional electronic seatpost devices. Moreover, although the discussion above is provided in light of controlling a motor in a dropper seatpost, other embodiments are well suited to being utilized in conjunction with different components such as, but not limited to, front shock assembly 37, rear shock assembly 38, front fork 34, and various other vehicle components/features. Thus, one embodiment is able to control or determine the movement, translation, and/or rotation of some portion of the front shock assembly 37 (e.g., shock shaft movement), rear shock assembly 38, front fork 34 (e.g., fork extension and/or compression), or various other vehicle components/features (e.g., ski position on a snow machine, etc.). Additionally, in such embodiments, the controlling or determining of the movement, translation, and/or rotation of some portion of the vehicle component and/or feature is achieved without requiring the use of visual indices, motion measurement tools, or the like.

In one embodiment, although a wired connection between the controller and motor 450 is disclosed as one method for monitoring and or controlling the power to motor 450, other embodiments are well suited to using a wireless communication to communicate between, for example, the controller and motor 450.

In one embodiment, the cutout 422 in a portion of the rotary flow control valve 420 that interfaces with the lug 423 is used to key the rotary flow control valve 420 to the cross holes 503.

In one embodiment, electronically adjustable valve assembly 333 is (effectively) a two-state valve. In other words, the electronically adjustable valve assembly 333 is an on/off valve. In one embodiment, the rotary flow control valve 33 is an on/off valve such that it is fast enough in its response such that a user would not be able to stop the dropper seatpost 300 between states (e.g., state 1-the original user set saddle height and state-2 the lowest dropper seatpost setting).

In one embodiment, the electronically adjustable valve assembly 333 may have intermediate states (to limit flow, such as a high flow, a medium flow, a slow flow, etc., but not at zero flow). For example, the electronically adjustable valve assembly 333 could have intermediate settings to control flow. In one embodiment, there may be a control system (an encoder on motor 450 with different settings thereon, a stepper motor, etc.) to control/adjust the on/off type rotating valve into one or more intermediate states, (e.g., between on and off), to provide a regulated flow.

In general, translating shaft 402 moves up and down with the saddle 32. In one embodiment, the translating shaft 402 is attached to the piston 405 to create the inner fluid chamber 410 which is at high pressure when the rider weight is being supported. In one embodiment, the outer fluid chamber 415 is a fluid chamber that is annular to the inner fluid chamber 410. When the rotary flow control valve 420 is opened, the fluid in the inner fluid chamber 410 moves through the open rotary flow control valve 420 and into the outer fluid chamber 415. In one embodiment, the movement of the fluid into the outer fluid chamber 415 will move the IFP 381 upward toward the top of the dropper seatpost 300 as the dropper seatpost 300 is compressed (or moved into its lower height).

Although components of Figure 4A are shown in given locations in accordance with one embodiment, in other embodiments, one, some, or all of the components shown in Figure 4A could be located in other locations, one or more components could be separated into two or more pieces and dispersed, etc. The use of the locations of the components as shown in Figure 4A are indicative of one embodiment, which is provided for purposes of clarity.

### Mechanically Actuated Rotary Flow Control Valve Assembly

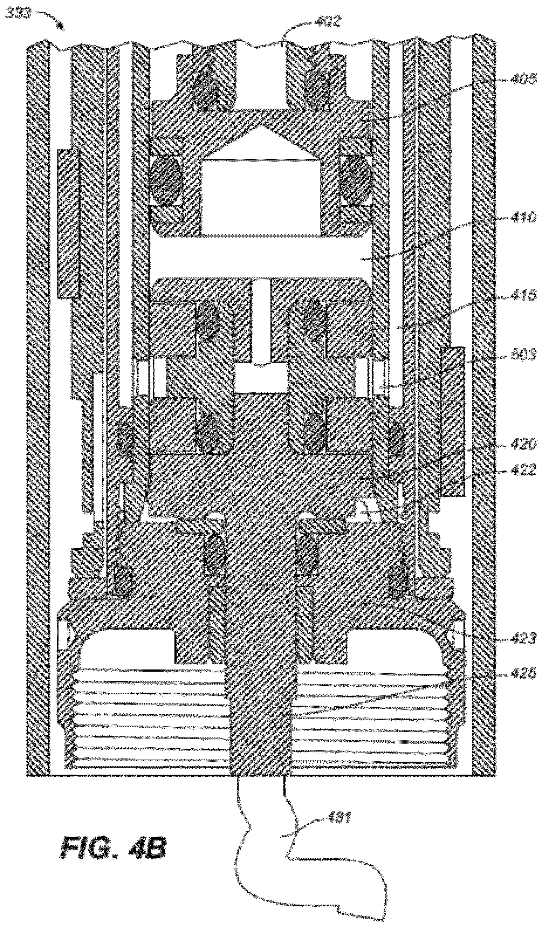

With reference now to Figure 4B, a cross-section view (identified in Figure 3B) of a portion of the dropper seatpost 300 including a mechanical actuator 481 (e.g., a cable, hydraulic line, etc.) for mechanically actuating electronically adjustable valve assembly 333 is shown in accordance with an embodiment. In general, the operation of the embodiment shown in Figure 4B is similar to that of Figure 4A, except for the change from a motor 450 used to electronically drive the electronically adjustable valve assembly 333 of Figure 4A, to a mechanical actuator to mechanically actuate the electronically adjustable valve assembly 333.

In one embodiment, the mechanical actuator 481 would provide a control capability such that a user input on a user interface 205 (or similar type device) would provide a mechanical actuation of the rotary flow control valve within the electronically adjustable valve assembly 333 to change the state from open, to closed, and/or to partially open.

Although components of Figure 4B are shown in given locations in accordance with one embodiment, in other embodiments, one, some, or all of the components shown in Figure 4B could be located in other locations, one or more components could be separated into two or more pieces and dispersed, etc. The use of the locations of the components as shown in Figure 4B are indicative of one embodiment, which is provided for purposes of clarity.

### Electronically actuated dropper seatpost

With reference again to Figure 3B and Figures 4A and 4B, in one embodiment, the components of electronically adjustable valve assembly 333 are coupled together during manufacture/assembly to form a single electronically adjustable valve assembly 333. In one embodiment, electronically adjustable valve assembly 333 is broken down into two or more distinct and/or different component assemblies which are connectively coupled during installation to form an operational electronically adjustable valve assembly 333.

For example, in one embodiment where the electronically adjustable valve assembly 333 is broken down into two or more distinct and/or different component assemblies, one component assembly will include the piston 405, translating shaft 402, inner fluid chamber 410, outer fluid chamber 415, rotary flow control valve 420, and part of drive feature 425, and another component assembly will include part of a first assembly (e.g., may be located within the dropper seatpost 300 and sealed from atmosphere while the drive feature 425 will extend through a seal of some type and out of the bottom 326 of dropper seatpost 300) and the motor 450 is installed at a different location on the bicycle 50. Thus, upon installation of the dropper seatpost 300 into the seat tube 83, the electronically adjustable valve assembly 333 will be operationally assembled when the drive feature 425 of the rotary flow control valve 420 is in mechanical contact with motor 450.

In one embodiment, this mechanical contact occur when the motor 450 is installed within the seat tube 83 and the drive feature 425 makes mechanical contact therewith. In another embodiment, this mechanical contact occurs when the motor 450 is installed somewhere else on the vehicle and a mechanical connection is made between the drive feature 425 and the motor 450. In one embodiment, the mechanical connection may be a cable or the like that is coupled between the motor 450 and the drive feature 425, thereby allowing the output of motor 450 to be rotationally transferred to drive feature 425.

In one embodiment, electronically adjustable valve assembly 333 receives its power from an external power source such as power source 65, power source 65h, or the like.

In one embodiment, dropper seatpost 300 includes a power source 65d as shown in Figure 4A. In one embodiment, power source 65d provides power to motor 450. In one embodiment, power source 65d is similar to the power sources described in the power source discussion herein, and as such, the entirety of any power source discussion provided herein is incorporated by reference for purposes of clarity.

In one embodiment, the power source 65s is integrated with the electronically adjustable valve assembly 333. In one embodiment, power source 65s is located separate from electronically adjustable valve assembly 333. In one embodiment, the power source 65s is located separately from dropper seatpost 300.

In one embodiment, power source 65d is located at or near the saddle attachment location (e.g., saddle clasp assembly 350). For example, a location such as 333b shown in Figure 3A. In one embodiment, power source 65d is not located at or near the saddle attachment location. For example, a location other than 333b shown in Figure 3A.

In one embodiment, power source 65d is located on a portion of the dropper seatpost 300 that does not move with respect to main frame 24, such as lower post 315. In one embodiment, power source 65d is located on a portion of dropper seatpost that is inserted into seat tube 83, such as lower post 315. In one embodiment, power source 65d is located on a portion of the dropper seatpost 300 that does not move with respect to bicycle 50. For example, a location such as 333 shown in Figure 3A.

In one embodiment, power source 65d is located at or near seat tube collar 325 of the dropper seatpost 300. For example, a location such as 333a shown in Figure 3A.

In one embodiment, electronically adjustable valve assembly 333 (or the motive component thereof) receives its input information from one or more of the controller(s) and component(s), such as, but not limited to controller 39, a controller coupled with another active shock assembly, another vehicles' controller, controller 39h of user interface 205, controller 39s of rear shock assembly 38, mobile device 95, user interface 205, another active shock assembly (e.g., front shock assembly 37), switch 93, sensor(s) 35, or the like.

In one embodiment, dropper seatpost 300 includes a controller 39d as shown in Figure 4A. In one embodiment, controller 39d is similar in operation to the controller 39 described herein. In one embodiment, controller 39d provides the input signal to the motive component of electronically adjustable valve assembly 333 (e.g., motor 450, actuator, solenoid, or the like). In one embodiment, the input signal is received from one or more of the controller(s) and component(s), such as, but not limited to controller 39, controller 39d, a controller coupled with another active shock assembly, a controller and/or component associated with another vehicle and/or party, controller 39h of user interface 205, controller 39s, mobile device 95, user interface 205, another active shock assembly (e.g., front shock assembly 37), switch 93, sensor(s) 35, or the like.

In one embodiment, controller 39d includes wired or wirelessly communication capabilities and protocols such as those described in the communications discussion herein, which is not repeated herein. Instead, the entirety of any communications discussions herein is incorporated by reference for purposes of clarity.

In one embodiment, controller 39d is integrated with the electronically adjustable valve assembly 333. In one embodiment, controller 39d is located separate from electronically adjustable valve assembly 333. In one embodiment, controller 39d is located separately from dropper seatpost 300.

In one embodiment, controller 39d is located at or near the saddle attachment location (e.g., saddle clasp assembly 350). For example, a location such as 333b shown in Figure 3A. In one embodiment, controller 39d is not located at or near the saddle attachment location. For example, a location other than 333b shown in Figure 3A.

In one embodiment, controller 39d is located on a portion of the dropper seatpost 300 that does not move with respect to main frame 24, such as lower post 315. In one embodiment, controller 39d is located on a portion of dropper seatpost that is inserted into seat tube 83, such as lower post 315. In one embodiment, controller 39d is located on a portion of the dropper seatpost 300 that does not move with respect to bicycle 50. For example, a location such as 333 shown in Figure 3A.

In one embodiment, controller 39d is located at or near seat tube collar 325 of the dropper seatpost 300. For example, a location such as 333a shown in Figure 3A.

In one embodiment, controller 39d uses a two-wire configuration to interact with motor 450.

In one embodiment, controller 39d is integrated with dropper seatpost 300 and as such, is not easily or readily removable without some amount of disassembly. As such, controller 39d would have to be accessed during a disassembly procedure.

In one embodiment, controller 39d is removably coupled with dropper seatpost 300 such that it can be removed, replaced, or the like. For example, controller 39d would be located in an accessible location, such as a bottom of dropper seatpost 300, inside a cover or housing of dropper seatpost 300, or the like. In one embodiment, by being removably coupled with dropper seatpost 300, controller 39d can be removed by a user for replacement, storage, security (e.g., so it is not stolen), and the like. For example, in one embodiment, controller 39d may be removed from dropper seatpost 300 when the bicycle 50 is not being ridden to ensure that it is not being powered on and wasting energy, when other than riding movement occurs with respect to bicycle 50 (e.g., movement in a garage/storage area, loading and/or unloading, transit, etc.).

In one embodiment, electronically adjustable valve assembly 333 includes power source 65d and controller 39d to provide the input signal and power to motor 450. In one embodiment, power source 65d would be co-located with (or located near) motor 450 and controller 39d would be located apart from both power source 65d and motor 450.

In one embodiment, controller 39d would be co-located with (e.g., located near, next to, or even integrated with) motor 450 and power source 65d would be located apart from both controller 39d and motor 450.

In one embodiment, controller 39d and power source 65d would be co-located with (or located near) motor 450. In one embodiment, neither controller 39d nor power source 65d would be coupled with (or located near) motor 450.

In one embodiment, controller 39d and power source 65d would be co-located with (or located near) one another while also being located apart from motor 450. In one embodiment, controller 39d and power source 65d would be located apart from one another while also being located apart from motor 450.

In one embodiment, slip coupling is used to electrically couple power source 65d with other desired components and/or features such as, but not limited to, motor 450, controller 39d (or another controller, multiple controllers, etc.), and the like.

In one embodiment, motor 450 is integrated with the electronically adjustable valve assembly 333. In one embodiment, motor 450 is located separate from electronically adjustable valve assembly 333. In one embodiment, motor 450 is located separately from dropper seatpost 300.

In one embodiment, motor 450 is located at or near the saddle attachment location (e.g., saddle clasp assembly 350). For example, a location such as 333b shown in Figure 3A. In one embodiment, motor 450 is not located at or near the saddle attachment location. For example, a location other than 333b shown in Figure 3A.

In one embodiment, motor 450 is located on a portion of the dropper seatpost 300 that does not move with respect to main frame 24, such as lower post 315. In one embodiment, motor 450 is located on a portion of dropper seatpost that is inserted into seat tube 83, such as lower post 315. In one embodiment, motor 450 is located on a portion of the dropper seatpost 300 that does not move with respect to bicycle 50. For example, a location such as 333 shown in Figure 3A.

In one embodiment, motor 450 is located at or near seat tube collar 325 of the dropper seatpost 300. For example, a location such as 333a shown in Figure 3A.

In one embodiment, motor 450 is located at the base of dropper seatpost 300

In one embodiment, motor 450 is integrated with dropper seatpost 300 and as such, is not easily or readily removable without some amount of disassembly. As such, motor 450 would have to be accessed during a disassembly procedure.

In one embodiment, a wiring harness is utilized to couple two or more of the components of the dropper seatpost 300 such as, but not limited to, motor 450, power source 65d, controller 39d (or another controller, multiple controllers, etc.), and the like. In one embodiment, for example, motor 450 and controller 39d are located between the upper post 310 and the lower post 315 of dropper seatpost 300. In one embodiment, the wires are disposed between the two members/posts of dropper seatpost 300 which slide with respect to each other. More specifically, in one embodiment, the wires are disposed in a gap between the upper post 310 and the lower post 315 of dropper seatpost 300. In one embodiment, an electrically conductive strip, or similar, is disposed, for example, along the interior of a portion of dropper seatpost 300. In one embodiment, a connection mechanism, such as but not limited to, a rolling mechanism, a lever arm, or similar, makes contact with the electrically conductive strip. In so doing, an electrically conductive current path is formed. In one embodiment, the electrically conductive path is used, for example, to couple controller 39d and motor 450, power source 65d and controller 39d, motor 450 and power source 65d, the like.

In one embodiment, the components of electronically adjustable valve assembly 333 are installed together during the build of dropper seatpost 300, such that the piston 405, translating shaft 402, inner fluid chamber 410, outer fluid chamber 415, rotary flow control valve 420, drive feature 425 and motor 450 are within the sealed atmospheric environment of the dropper seatpost 300. In the following discussion, this is referred to as a single electronically adjustable valve assembly 333 housing embodiment.

In one embodiment, the single electronically adjustable valve assembly 333 housing embodiment may include an O-ring or other type of seal about the drive feature 425 between the rotary flow control valve 420 and motor 450 to divide the single electronically adjustable valve assembly 333 into a "wet" side and a "dry" side. In one embodiment, the "wet" side components (e.g., piston 405, translating shaft 402, inner fluid chamber 410, outer fluid chamber 415, rotary flow control valve 420) are within the area of, and exposed to the working fluid while the "dry" side components, (e.g., motor 450, controller 39d, power source 65d, non-contact charging components, and the like), are separated from the working fluid. Although the above discussion includes a list of one embodiment of "wet" side and "dry" side components. It should be appreciated that one or more of the components of the single electronically adjustable valve assembly 333 could be moved from the "wet" side and/or "dry" side.

In one embodiment, when single electronically adjustable valve assembly 333 housing embodiment is completely installed within the dropper seatpost 300, the seal would be located somewhere along the drive feature 425 such that the working fluid can use the flow paths, e.g., inner fluid chamber 410, outer fluid chamber 415, rotary flow control valve 420, cross holes 503, and the like, and flow can be controlled by the "wet" components, while the "dry" components will remain separate from the working fluid.

In one embodiment, the seal is also a pressure type fluid seal such that the "wet" components would be in a pressurized environment, while the "dry" components would remain at atmosphere. In one embodiment, by utilizing a pressure type fluid seal, the battery for the electronically adjustable valve assembly 333 could be accessible for power source 65d replacement. For example, in the dropper seatpost 300 embodiment, some, or a portion of the bottom 326 could be removable to provide access to the power source 65d and then be reinstalled to provide a level of protection from debris, water, etc.

In one embodiment, by utilizing a pressure type fluid seal, a charging port for the power source 65d of the single electronically adjustable valve assembly 333 housing could be provided in the dropper seatpost 300 wherever the power source 65d is located. For example, when the power source 65d is located close to, or in proximity of the bottom 326, bottom 326 could include a charging port. In one embodiment, the charging port would include a dust cover (or the like) to provide a level of protection from debris, water, etc.

In one embodiment, e.g., the single electronically adjustable valve assembly 333 housing embodiment, the power source 65d (e.g., battery or other power source such as a capacitor, etc.) has a wirelessly rechargeable capability such that the power source 65d could be charged using a wireless power transfer system. E.g., using an inductive charger (or the like) within a given distance of the wirelessly rechargeable capability of the power source 65d.

In one embodiment, by using wireless power transfer, the power source 65d can be charged even though it is sealed within the dropper seatpost 300. In one embodiment, the power source 65d can be charged while the dropper seatpost 300 is installed in the seat tube 83. This can be dependent upon factors such as, the main frame 24 (e.g., composite, metal, thin, thick, etc.), the type of wireless power transfer being used, etc.

In one embodiment, the dropper seatpost 300 is removed from seat tube 83, and the portion of the dropper seatpost 300 containing the power source 65d, would be located proximate to the wireless charger to obtain the wireless charge.

In one embodiment, some, or the entirety of electronically adjustable valve assembly 333 is removably coupled with dropper seatpost 300 such that it can be removed, replaced, or the like. For example, electronically adjustable valve assembly 333 would be located in an accessible location, such as a bottom of dropper seatpost 300, inside a cover or housing of dropper seatpost 300, or the like. In one embodiment, by being removably coupled with dropper seatpost 300, electronically adjustable valve assembly 333 can be removed by a user for replacement, storage, security (e.g., so it is not stolen), and the like. For example, in one embodiment, electronically adjustable valve assembly 333 may be removed from dropper seatpost 300 when the bicycle 50 is not being ridden to ensure that it is not being powered on and wasting energy, when other than riding movement occurs with respect to bicycle 50 (e.g., movement in a garage/storage area, loading and/or unloading, transit, etc.).

Further discussion and examples of an electronically adjustable valve assembly are described in US Patent Application 17/591,392, the content of which are incorporated by reference herein, in its entirety.

### Power Source

In one embodiment, one, some, or all of the controller 39, sensors 35, active valves (e.g., of rear shock assembly 38 and/or front shock assembly 37), dropper seatpost 300, switch 93, user interface 205, one or more of the smart components, and the like, will use a power source.

In one embodiment, the power source is comprised of a power station or power pack. In one embodiment, the power source is a non-rechargeable battery such as, but not limited to, one or more of a CR2032 battery, a double A battery, a triple A battery, a lithium coin cell battery, a silver oxide cell battery, or the like.

In one embodiment, the power source is a rechargeable battery such as, but not limited to, a lithium-ion battery. In one embodiment, the power source can be recharged wired or wirelessly. For example, a power source having a wirelessly rechargeable capability means it could be charged using a wireless power transfer system. E.g., using an inductive charger (or the like) within a given distance of the wirelessly rechargeable capability of the power source. Wireless charging, in its most basic form utilizes a copper coil to create an oscillating magnetic field, which can create a current in one or more receiver antennas. In general, the wireless charger could be a charging pad that use tightly-coupled electromagnetic inductive or non-radiative charging; A charging bowl or through-surface type charger that uses loosely-coupled or radiative electromagnetic resonant charging to transmit a charge a few inches; An uncoupled radio frequency wireless charger that allows a trickle charging capability at distances of many feet, or the like.

Examples of a wireless power transfer systems that could be used in one or more embodiments include those defined by the wireless power consortium (WPC) Qi standard, the AirFuel Alliance (e.g., Duracell Powermat, PowerKiss, etc.), WiTricity, and the like.

In one embodiment, by using wireless power transfer, the power source can be charged even though if it is sealed within a component. In one embodiment, the power source can be charged while the component is installed on the bicycle 50. In one embodiment, the wireless power transfer capability is dependent upon factors such as, material type (e.g., composite, metal, thin, thick, etc.), the type of wireless power transfer being used, etc.

In one embodiment, the power source is an energy harvesting switch that does not require a battery or other powered connection. As such, the energy harvesting switch is capable of operating for an indefinite amount of time without requiring any type of recharge, battery change, etc. For example, in one embodiment, the energy harvesting switch utilizes a momentary generator such as ZF electronics AFIG-0007 to provide power.

In one embodiment, the power source is a combination or hybridization of two or more of the replaceable battery, the rechargeable battery, the energy harvesting switch, and the like.

In one embodiment, one power source could be used to power a plurality of components. For example, power source 65 may be used as a power source for one, some, or all of the controller 39, sensors 35, active valves (e.g., of rear shock assembly 38 and/or front shock assembly 37), dropper seatpost 300, switch 93, user interface 205, one or more of the smart components, and the like.

In one embodiment, one power source could be used to power a plurality of components, while other of the components would have their own power source. For example, power source 65 may be used as a power source for a plurality of components such as one or more sensors 35, active valves (e.g., of rear shock assembly 38 and/or front shock assembly 37), dropper seatpost 300, switch 93, user interface 205, one or more of the smart components, and the like. While one or more sensors 35, dropper seatpost 300, user interface 205, controller 39, or the like would each have their own power source.

In one embodiment, each of switch 93, user interface 205, active valve damper(s) (e.g., rear shock assembly 38, front shock assembly 37), dropper seatpost 300, and the like, as well as other interactive components and features such as one or more of: controller 39, sensor 35, mobile device 95, power source 65, smart components, and the like, would have their own power source.

In one embodiment, there may be a plurality of power sources shared by any combination of each of switch 93, user interface 205, active valve damper(s) (e.g., rear shock assembly 38, front shock assembly 37), dropper seatpost 300, and the like, as well as other interactive components and features such as one or more of: controller 39, sensor 35, mobile device 95, power source 65, smart components, and the like, would have their own power source. For example, in one embodiment, user interface 205 and dropper seatpost 300 would share a power source.

In one embodiment, the power source is integrated with a component, and as such, is not easily or readily removable without some amount of disassembly. For example, the power source may be integrated into dropper seatpost 300, controller 39, sensor 35, shock assembly 38, or the like. As such, the power source would either have to be replaced during a disassembly procedure, designed to last for a given amount of time, be wired or wirelessly rechargeable in place, or the like. For example, in one embodiment, the component might have a charging port that allows a charger to connect with the power source integrated therein.

In one embodiment, the power source is removably coupled with one or more components such that it can be removed, replaced, or the like. For example, the power source would be located in an accessible location, such as a bottom of dropper seatpost 300, inside a cover or housing such as on controller 39, shock assembly 38, sensor 35, dropper seatpost 300, or the like. In one embodiment, by being removably coupled with one or more components, the power source can be removed by a user for replacement, storage, charging, security (e.g., so it is not stolen), and the like.

In one embodiment, one or more power sources may be externally mounted on the frame and/or one or more other components of the bicycle. In one embodiment, the power source could be externally mounted such that it is easily and/or quickly removable for charging, replacement, storage, and/or security. In one embodiment, the power source could be externally mounted such that it is not easily and/or quickly removable for charging, replacement, storage, and/or security.

In one embodiment, one or more power sources may be internally mounted on the frame and/or one or more other components of the bicycle. In one embodiment, the power source could be internally mounted such that it is easily and/or quickly removable for charging, replacement, storage, and/or security. In one embodiment, the power source could be internally mounted such that it is not easily and/or quickly removable for charging, replacement, storage, and/or security.

In one embodiment, the power source could be a power source that is not dedicated to any of the components discussed herein. For example, if power source 65 is an e-bike battery (or a power source for a light, for controlling a suspension state (e.g., raising or lowering the starting point of a front shock, raising or lowering the starting point of a rear shock), for a display of the bike, for an electronic bike transmission, for a powered derailleur, etc.) it would have a primary functionality of providing power to the e-bike motor. As such, it may not be considered a dedicated battery for any other components. However, in one embodiment, the e-bike battery may be used as a power source for one, some, or all of the controller 39, sensors 35, active valves (e.g., of rear shock assembly 38 and/or front shock assembly 37), dropper seatpost 300, switch 93, user interface 205, one or more of the smart components, and the like.

In one embodiment, and as a significant advantage over conventional approaches, the various power source location and/or configuration embodiments described herein eliminate the need for a user/rider to keep track of, or otherwise monitor, the power level of the power source at the component being powered. Instead, the user/rider is able to remove and "plug in" the power source, for example, after use of the bike and the power source will be fully recharged. Upon recharging, the power source is replaced on the bike, and the rider/user is assured that ample power will be provided to the component (or components being powered), E.g., the dropper seatpost 300, a controller, and/or various other components/features of the bike.

### Communications

In one embodiment, one, some, or all of the electronically actuated components 75 discussed herein including switch 93, sensor 35f, sensor 35r, controller 39, active valves, mobile device 95, and the like are wired and/or wireless and can communicate with one or more of the other electronically actuated components 75 over the wired network, over a wireless network, or over a hybrid wired and wireless network. The wireless network is selected from one or more of: a wireless personal area network (WPAN), a low power network (LPAN), Internet of things (IoT) connectivity, or the like. In one embodiment, the wireless communication protocol could be, but is not limited to, Bluetooth, WiFi, Bluetooth Low Energy (BLE), near field communication (NFC), UHF radio signal, Worldwide Interoperability for Microwave Access (WiMax), long-term evolution (LTE), industrial, scientific, and medical (ISM) band, IEEE 802.15.4 standard communicators, Zigbee, ANT, ISA100.11a (wireless systems for industrial automation: process control and related applications) wireless highway addressable remote transducer protocol (HART), MiWi, IPv6 over low-power wireless personal area networks (6LoWPAN), thread network protocol, subnetwork access protocol (SNAP), and the like.

In one embodiment, one, some, or all of the electronically actuated components 75 discussed herein including switch 93, sensor 35f, sensor 35r, controller 39, active valves, controller 39, power source 65, mobile device 95, and the like, could form a wireless mesh, such as a bicycle area network (BAN) or the like. In one embodiment, one or more components of the BAN could interact with the user/rider in any number of ways such as via touch, sound, vision, radio, wearable, and the like.

In one embodiment, the electronically actuated components 75 within the wireless mesh may include an auxiliary or propriety private network encryption. In one embodiment, one or more components within the wireless mesh may include communication protocols for one or more peers, such as an out-of-BAN wireless device that doesn't want to share its network. In this case, the out-of-BAN wireless device can provide a hardware interface and it can be piped into the BAN. Thus, in one embodiment, the wireless mesh network can be used to connect and/or control almost any wireless aspect, as the network, topology, and features thereof are well suited to interacting with basic device operating structures.

In one embodiment, information broadcast from a given component will include a unique identifier (ID) that identifies the specific component that made the broadcast. Thus, even when a number of different components are operating in the same environment, the controller 39 will be able to identify which component sent the signal based on the unique ID. In one embodiment, the unique ID is used during the programming/pairing of the components with controller 39 and/or the network.

In one embodiment, the unique ID is used by controller 39 to validate the sending component. Although a unique ID is used in one embodiment, in another embodiment, a different identification methodology may be used to identify the different components in the network. In one embodiment, the wireless network is an intra-vehicle wireless network (such as a BAN) for data transmission between at least two components coupled with the vehicle, the at least two components including, but not limited to, at least one sensor, the controller 39, and at least one peripheral device (such as a smart component, switch, or the like) coupled with the vehicle. In one embodiment, the intra-vehicle wireless network is a wireless mesh network. In one embodiment, the intra-vehicle wireless network includes an intra-vehicle transmission authentication and encryption protocol.

In one embodiment, the broadcast information or data (e.g., message payload) will include additional information/data comprising the wireless network which is passed to and from peripheral devices in the network. Thus, in one embodiment, the wireless network communication and/or wireless mesh network will allow for information/data to be exchanged between adjacent vehicles, vehicle networks, etc.

In one embodiment, the wireless network includes an inter-vehicle communication (IVC) wireless network for data transmission between the vehicle and at least another vehicle, between the vehicle and a mobile communications device distinct from the vehicle, between the vehicle and an infrastructure component (such as a traffic light, beacon on a stop sign, road mile marker, a benchmark, or the like). In one embodiment, the IVC wireless network is a wireless mesh network. In one embodiment, the IVC wireless network includes an IVC transmission authentication and encryption protocol.

The IVC transmission authentication and encryption protocol can be distinct and different from the intra-vehicle transmission authentication and encryption protocol, such that a device receiving a communication can determine the origin of the communication. Often, the origin of the communication is important depending upon the data provided in the communication. For example, a transmission that includes sensor provided information might only be verified and acted upon if it includes the intra-vehicle transmission authentication and encryption protocol (such as for security purposes or the like).

In one embodiment, the IVC transmission authentication and encryption protocol can include levels of trust. For example, a vehicle used by a friend may have a "trusted" IVC transmission authentication and encryption protocol that allows a sensor from the friend's vehicle to provide sensor data to the user's controller 39 that is verified and acted upon as sensor data from a "trusted" peripheral. In contrast, when an IVC transmission includes sensor provided information but it does not have a "trusted" IVC transmission authentication and encryption protocol it would not be verified and acted upon. However, other information such as stop sign warnings, terrain changing information, or the like from IVC transmissions would be evaluated by the controller 39 and may be used depending upon context, or the like.

### Communications protocol

In general, the goal of the disclosed communication protocol is low latency and long battery life. In one embodiment, the network implements the proprietary low-latency low-power radio protocol to provide an effective transport for communication between electronically adjustable valve assembly 333 and user interface 205.

In one embodiment, a unique ID is used during the programming/pairing of the electronically adjustable valve assembly 333 with the user interface 205. In one embodiment, the unique ID is used by electronically adjustable valve assembly 333 to identify a valid user interface 205. In one embodiment, any transmitted signal includes a unique identifier (ID) that identifies the user interface 205 that broadcast the signal. Thus, even when a number of different user interfaces are operating in the same environment, the electronically adjustable valve assembly 333 will be able to identify when the signal is sent from the appropriate user interface 205.

In one embodiment, the unique ID, and other data is stored in an erasable programmable read-only memory on a version of electronically adjustable valve assembly 333. In one embodiment, the memory can be written to with RF energy, NFC protocols, or the like. As such, the memory could be updated via user interface 205, a mobile device, a laptop, or the like.

In one embodiment, the wireless signal is a "telegram" or the like that includes the unique identifier (ID) that identifies the electronically adjustable valve assembly 333 and/or the user interface 205 that broadcast the telegram signal. Thus, even when several electronic and/or mechanically actuated versions of rotary flow control valve assemblies and/or user interfaces are operating in the same environment, the telegram signal will identify which device sent the signal. Although the unique ID is used in one embodiment, in another embodiment, a different portion of the telegram signal is used to identify the transmitting device.

In one embodiment, the telegram signal is sent via a radio frequency (RF) transmitter such as used in a wireless personal area network (WPAN), a low power network (LPN), Internet of things (IoT) connectivity, or the like. In one embodiment, the RF protocol could be, but is not limited to, Bluetooth, WiFi, Bluetooth Low Energy (BLE), near field communication (NFC), UHF radio signal, Worldwide Interoperability for Microwave Access (WiMax), industrial, scientific, and medical (ISM) band, IEEE 802.15.4 standard communicators, Zigbee, ANT, ISA100.11a (wireless systems for industrial automation: process control and related applications) wireless highway addressable remote transducer protocol (HART), MiWi, IPv6 over low-power wireless personal area networks (6LoWPAN), thread network protocol, subnetwork access protocol (SNAP), and the like.

In one embodiment, the electronically adjustable valve assembly 333 and/or the user interface 205 transmitter is powered by a momentary generator such as ZF electronics AFIG-0007 or the like. In one embodiment, if the IEEE 802.15.4 standard is utilized, the electronically adjustable valve assembly 333 and/or the user interface 205 will include an IEEE 802.2 logical link control sublayer to receive and interpret the signal.

In one embodiment, the communication capabilities of the electronically adjustable valve assembly 333 and/or user interface 205 resemble a system such as the ZF Electronics AFIS-5003 with a SNAP transmitter, and the receiving device will have a universal asynchronous receiver/transmitter (UART) interface supporting RS-232 or RS-485 using TTL logic levels to receive and interpret the signal.

In one embodiment, the electronically adjustable valve assembly 333 and/or the user interface 205 will periodically send a heartbeat (e.g., check-in message), to inform the other of the electronically adjustable valve assembly 333 and/or the user interface 205 that they are still active. In one embodiment, the heartbeat is sent at a 1Hz communication rate. In one embodiment, the other of the electronically adjustable valve assembly 333 and/or the user interface 205 that did not send the heartbeat will provide a response message to confirm that there is a wireless connection therebetween.

In one embodiment, a timer is used by the electronically adjustable valve assembly 333 and/or the user interface 205 to count down a check-in or heartbeat time period. In one embodiment, the time period measured by the timer is preset by the manufacturer. In one embodiment, the time period measured by the timer is adjustably set by the manufacturer, by the user, by a mechanic, based on the vehicle location, terrain type, or the like.

In one embodiment, when the timer expires, the heartbeat is sent. In one embodiment, once the wireless connection between the electronically adjustable valve assembly 333 and the user interface 205 is confirmed, the timer will be restarted.

In one embodiment, if there is no response to the heartbeat with a predefined period of time, another heartbeat will be sent. In one embodiment, if there is still no response received, an additional pre-defined number of heartbeat signals will be sent.

In one embodiment, a microprocessor on the electronically adjustable valve assembly 333 and/or the user interface 205 has a built-in radio capable of standard Bluetooth Low Energy and other communication as part of the ISM Band technologies. In one embodiment, the electronically adjustable valve assembly 333 and/or the user interface 205 uses Enhanced Shockburst (ESB). In one embodiment, the microprocessor on the electronically adjustable valve assembly 333 and/or the user interface 205 build in radio protocol could be, but is not limited to, WiFi, NFC, UHF radio signal, WiMax, ISM band, an IEEE 802.15.4 standard communicator, Zigbee, ANT, ISA100.11a, wireless HART protocol, MiWi, IPv6, 6LoWPAN, thread network protocol, SNAP, and the like.

In one embodiment, user interface 205 has two wireless radios, e.g., radio 1 and radio 2. In one embodiment, radio 1 handles wireless communication with peripherals where latency and/or battery life is not a concern. For example, radio 1 could communicate with devices such as other controllers, sensors, mobile devices, a power meter, or the like where ~ 200 msec latency is not a problem. In one embodiment, radio 2 handles the ESB communication and is dedicated to any low latency/low power devices such as electronically adjustable valve assembly 333.

In one embodiment, having two operational radios is not that good from a battery life standpoint, but, in one embodiment, the user interface 205 houses a relatively large rechargeable battery. Thus, the expectation for the user interface 205 battery burn time is hours not months.

In one embodiment, electronically adjustable valve assembly 333 has a single wireless radio that uses ESB communication and is always listening for a message from the user interface 205. In one embodiment, the amount of power draw from the "always-listening" ESB radio is minimal. However, the always-listening is key for low latency communication.

For example, when the user interface 205 has a message to send to electronically adjustable valve assembly 333, it can be nearly instantaneously received by electronically adjustable valve assembly 333 (or within 2 msec). In one embodiment, it can be received so quickly because the electronically adjustable valve assembly 333 does not have to wake up and try to bond with the user interface 205 (a strategy normally employed to conserve battery life). It is already awake and ready.

In one embodiment, the initial operation of the wireless communication protocol is to pair the electronically adjustable valve assembly 333 to the user interface 205. In one embodiment, the wireless communication pairing is made resistant against attempts made by unauthorized actors trying to attack and control the system by performing authentication and encryption between the wireless components. In general, examples of system attacks include, but are not limited to, replay attacks, impersonation, denial of service, and the like.

In one embodiment, replay attacks refers to actions such as, but not limited to, an attacker recording one or more of the messages and playing them back to the device which mistakenly interprets them as valid messages from the sensor(s).

In one embodiment, impersonation refers to actions such as, but not limited to, an attacker pretending to be a sensor, and sending one or more messages directly to the electronically adjustable valve assembly 333 and/or the user interface 205.

In one embodiment, denial of service refers to actions such as, but not limited to, an attacker sending one or more specially crafted messages that stop the system from working. Although a number of examples of system attacks are discussed herein, the examples are not exhaustive. In contrast, it is possible, and should be appreciated, that other types of system/communication attacks may be utilized.

In one embodiment, the authentication and encryption between the electronically adjustable valve assembly 333 and/or the user interface 205 includes the utilization of AES 128, or the like. For example, in one embodiment, the pairing procedure sets up all state required for the radio protocol to be secure, including the AES-128 symmetric key. Whenever a device - the electronically adjustable valve assembly 333 and/or the user interface 205 - is turned on, it generates a session-specific 4-byte nonce using a secure random number generator. This nonce is included in all communication between devices.

Within a single session, each device also stores a 4-byte sequence number, that starts at 0, and increments for every transmitted message. The AES-128 block cipher is operated in the Authenticated Encryption with Associated Data (AEAD) scheme, which allows encrypting the given plaintext, and authenticating associated plain text data. The AEAD scheme requires a 13-byte nonce value, referred to herein as AEADNonce. When the AES-128 symmetric key, and AEADNonce are unique for every packet, the connection is secured.

In one embodiment, the AEADNonce is constructed by concatenating the nonce of each device with the sequence number of the particular packet, for a total of 12 bytes, with the 13th byte padded with 00. This ensures the AEADNonce is unique, and the connection is therefore secure. In one embodiment, the application does not accept any packet which it receives that has a sequence number earlier than another packet it has already received. This ensures that replay attacks are not possible. To generate new packets with a valid sequence number, the attacker must know the AES-128 symmetric key.

In one embodiment, to perform this activity, Bluetooth communication (or the like) is used. In one embodiment, to perform this activity, ESB type communications is used. In one embodiment, once the pairing is completed and each component (e.g., the electronically adjustable valve assembly 333 and/or the user interface 205) has the keys, any further communications are made via ESB for the fast-communication state. In other words, once the electronically adjustable valve assembly 333 is connected to the user interface 205 the ESB protocol (or similar ISM Band Technology) takes over. For example, as discussed herein, the electronically adjustable valve assembly 333 and/or the user interface 205 periodically send a heartbeat message (e.g., a check-in) to the other of the electronically adjustable valve assembly 333 and/or the user interface 205 to make sure the system is working properly.

In one embodiment, since the electronically adjustable valve assembly 333 is always listening for a message from the user interface 205, the electronically adjustable valve assembly 333 will receive the message at the speed of the message being sent. In one embodiment, electronically adjustable valve assembly 333 will send an acknowledgement message back to the user interface 205. In one embodiment, electronically adjustable valve assembly 333 will not send an acknowledgement message back to the user interface 205.

In one embodiment, the communication latency is approximately 2.2 milliseconds. Where, the Accelerometer i2C at 100 kHz is approximately 1000 microseconds, the encryption is approximately 610 microseconds, and the time from the initiation of the transmission from user interface 205 until usable data is received at electronically adjustable valve assembly 333 (includes radio time and decryption) is approximately 545 microseconds.

Sometimes a message will not be received properly by the electronically adjustable valve assembly 333 and an associated acknowledgement message will not be returned to the user interface 205. In one embodiment, a message resend is then initiated. Each message resend attempt adds an average of 0.5 milliseconds latency. For example, if user interface 205 does not receive an acknowledgement message from the electronically adjustable valve assembly 333 within a given amount of time, the user interface 205 sends the message again. For example, assume a 10% chance of message failure. In this case, there is a 10% chance of needing a second message attempt, a 1% chance of needing a 3rd message attempt, and a .1% chance of needing a 4th message attempt. Each message attempt adds about 0.5 milliseconds latency, so even a 4th message attempt will be within the "non-user perceptible" latency period.

In one embodiment, one or both of the electronically adjustable valve assembly 333 and/or the user interface 205 can be in a number of different energy states to conserve battery life. Although a number of states are discussed, in one embodiment there may be more, fewer, or a different combination or variation of the described energy states. The use of the disclosed energy states is provided herein as one embodiment and for purposes of clarity.

One state is referred to as the operating state. This is the highest battery power consumption state. In the operating state, the electronically adjustable valve assembly 333 and/or the user interface 205 is transmitting and/or receiving data.

In a standby state, the electronically adjustable valve assembly 333 and/or the user interface 205 are awake and there is a connection therebetween. In the standby state, the user interface 205 is waiting to receive input from the user. When the user provides an input, user interface 205 will move into the operating state and transmit the data to electronically adjustable valve assembly 333.

In one embodiment, when electronically adjustable valve assembly 333 responds to the transmission from user interface 205, it will be known to both devices that there is a connection therebetween, that the signal has been received by electronically adjustable valve assembly 333, and that one or both the electronically adjustable valve assembly 333 and/or the user interface 205 can return to the standby state until the next time the user provides an input to user interface 205.

In one embodiment, the electronically adjustable valve assembly 333 may not provide a response to the transmission from user interface 205. In one embodiment, user interface 205 may not expect a response from electronically adjustable valve assembly 333 after user interface 205 sends the transmission.

In one embodiment, the electronically adjustable valve assembly 333 may only provide the heartbeat message to the user interface 205 at pre-defined intervals to evidence the connection between user interface 205 and electronically adjustable valve assembly 333.

In one embodiment, if user interface 205 expected but did not receive a response from electronically adjustable valve assembly 333, user interface 205 will include a programmed pre-defined number of attempts at transmitting the signal to electronically adjustable valve assembly 333 before making the determination that there is a disconnection in the communication between the user interface 205 and the electronically adjustable valve assembly 333.

In one embodiment, the pre-defined number of attempts is based on the transmission rate. For example, in one embodiment, it is assumed that it takes 0.5 milliseconds of time for the user interface 205 to transmit a signal to electronically adjustable valve assembly 333, for electronically adjustable valve assembly 333 to transmit a message received transmission to user interface 205 and also cause motor 450 to rotate rotary flow control valve 420 to an open position thereby activating the dropper seatpost 300.

If the time between the user input occurring (e.g., the user inputting a dropper command to user interface 205) and the movement of the dropper seatpost 300 being noticed by the rider is 1.5 milliseconds, then the pre-defined number of attempts taken by user interface 205 would be 3. Thus, user interface 205 will have tried as many times as possible (e.g., 0.5 x 3) to send the signal before the lack of dropper seatpost 300 movement was noticed by the rider.

In one embodiment, the number of times the user interface 205 tries could be more or less. The use of three attempts is used herein in one embodiment.

In one embodiment, such as after a period of inaction, or the user interface 205 determines that the bike is not being ridden (e.g., based on a user input, a sensor input, or the like) the user interface 205 will send a standby message to inform electronically adjustable valve assembly 333 that the bike is not being ridden. In one embodiment, the electronically adjustable valve assembly 333 will transition to a low-power mode or sleep mode when the standby message is received.

In one embodiment, once the electronically adjustable valve assembly 333 determines user interface 205 is turned off (or otherwise not responding), electronically adjustable valve assembly 333 will enter a no-heartbeat standby state (e.g., an intermediate battery power consumption state), where electronically adjustable valve assembly 333 is awake and listening but is not sending any transmissions (e.g., heartbeat transmissions, etc.).

In one embodiment, electronically adjustable valve assembly 333 will remain in the no-heartbeat standby state until the connection with user interface 205 is re-established. In one embodiment, when electronically adjustable valve assembly 333 receives a message from user interface 205, it will know that the connection with user interface 205 is established (or re-established) and electronically adjustable valve assembly 333 will transition from the no-heartbeat standby state to a heartbeat standby state.

In dormant state, the bike is stationary. For instance, the bike is in storage or otherwise parked and not being ridden. In one embodiment, when in dormant state, one or both of the electronically adjustable valve assembly 333 and/or the user interface 205 will go into low-power mode. In one embodiment, while in the dormant state, electronically adjustable valve assembly 333 will periodically wake up to transmit a signal to user interface 205. If no response is received, electronically adjustable valve assembly 333 will return to the dormant state, e.g., go back to sleep.

In contrast, if electronically adjustable valve assembly 333 receives a response from user interface 205 during the periodic wakeup, in one embodiment, electronically adjustable valve assembly 333 will change from the dormant state into the standby state.

Thus, in one embodiment, the electronically adjustable valve assembly 333 and/or the user interface 205 can move between the different states fluidly using the model described above. In one embodiment, the electronically adjustable valve assembly 333 and/or the user interface 205 will try to remain in (or return to) the lowest powered state for the specific situation.

In one embodiment, based on the different states described above, the estimate of battery life for a battery used by the electronically adjustable valve assembly 333 and the user interface 205 is determined using a duty cycle such as, for example, 2 hours per ride, 4 rides per week, 48 weeks per year.

In one embodiment, the power draw for each state is approximated as an average of 150 microamp draw during the active state, an average of 32 microamp draw during either standby state, and an average of 1 microamp draw during the dormant state.

In one embodiment, the battery is a CR2032 battery. In a CR2032 battery, the capacity is approximately 173 mAh. As such, and based on the power draw for each state and the duty cycle example above, the expected battery life of the battery of the electronically adjustable valve assembly 333 and/or the user interface 205 is 23 months. In one embodiment, if the duty cycle is different, the lifespan of the battery will be different.

In one embodiment, a different battery with a different capacity can be used. For example, a smaller (or lighter) battery, a rechargeable battery, or the like. For example, a road bike rider may want a smaller (or lighter) electronically adjustable valve assembly 333 as the reduction of weight is one of the most important goals. As such, the rider could use an electronically adjustable valve assembly 333 with a smaller battery and therefore swap the battery life (e.g., reduce the battery life from 23 months to a lower life span e.g., a few months, weeks, or the like), in order to obtain a weight savings.

In contrast, an avid mount bike rider may have a harder duty cycle, with more time of the electronically adjustable valve assembly 333 and/or the user interface 205 being in operating state, as such, the expected battery life would be reduced by the actual operation of the electronically adjustable valve assembly 333 and/or the user interface 205.

The foregoing Description of Embodiments is not intended to be exhaustive or to limit the embodiments to the precise form described. Instead, example embodiments in this Description of Embodiments have been presented in order to enable persons of skill in the art to make and use embodiments of the described subject matter. Moreover, various embodiments have been described in various combinations. However, any two or more embodiments can be combined. Although some embodiments have been described in a language specific to structural features and/or methodological acts, it is to be understood that the subject matter defined in the appended claims is not necessarily limited to the specific features or acts described above. Rather, the specific features and acts described above are disclosed by way of illustration and as example forms of implementing the claims and their equivalents.

Further aspects of the disclosure are set out in the following numbered set of Features:
1. An electronically actuated dropper seatpost comprising:
   an upper post;
   a lower post telescopically coupled with said upper post; and
   an electronically adjustable valve assembly configured to control a telescopic movement of said upper post and said lower post, said electronically adjustable valve assembly comprising:
      a valve controlling a flow path; and
      a motive component, wherein an electronic input to said motive component will change a flow rate of a fluid through said valve.
2. The electronically actuated dropper seatpost of Feature 1, wherein said valve is a rotary flow control valve comprising:
   a drive feature, wherein an electronic input to said motive component will cause said motive component to turn said drive feature thereby changing a position of said rotary flow control valve.
3. The electronically actuated dropper seatpost of Feature 1, wherein said valve comprises:
   a valve needle; and
   an orifice, wherein an electronic input to said motive component will cause said motive component to move said valve needle with respect to said orifice.
4. The electronically actuated dropper seatpost of Feature 1, 2 or 3, wherein said motive component is a DC motor.
5. The electronically actuated dropper seatpost of Feature 4, further comprising:
   a lug;
   a cutout in a portion of said valve, wherein an interaction between said cutout and said lug creates a bump stop;
   a control system for said DC motor, said control system comprising a current limit; and
   said bump stop causes said DC motor to reach said current limit.
6. The electronically actuated dropper seatpost of any preceding Claim, further comprising:
   a power source, said power source to provide said electronic input to said motive component, said power source fixedly or removably coupled with said dropper seatpost.
7. The electronically actuated dropper seatpost of Feature 6, wherein said power source is located in a location from a group of locations consisting of: co-located with said motive component, co-located with a controller, co-located with said motive component and said controller, located apart from said motive component, located apart from said controller, and located apart from said motive component and said controller
8. The electronically actuated dropper seatpost of any of Features 1 to 5, further comprising:
   a power source, said power source coupled with a component other than said dropper seatpost, said power source to provide said electronic input to said motive component and said component other than said dropper seatpost.
9. The electronically actuated dropper seatpost of any preceding Feature, further comprising:
   a controller, said controller to provide an input to said motive component, said input defining said change of said flow rate of said fluid through said valve, said controller fixedly or removably coupled with said dropper seatpost.
10. The electronically actuated dropper seatpost of Feature 9, wherein said controller is located in a location from a group of locations consisting of: co-located with said motive component, co-located with said power source, co-located with said motive component and said power source, located apart from said motive component, located apart from said power source, and located apart from said motive component and said power source.
11. The electronically actuated dropper seatpost of any of Features 1 to 8, further comprising:
   a controller, said controller coupled with a component other than said dropper seatpost, said controller to provide an input to said motive component, said input defining said change of said flow rate of said fluid through said valve, said controller to provide another input to said component other than said dropper seatpost, said another input defining a change to a characteristic of said component other than said dropper seatpost.
12. The electronically actuated dropper seatpost of Feature 11, wherein said controller located is in the location from a group of locations consisting of: co-located with said motive component, co-located with said power source, co-located with said motive component and said power source, located apart from said motive component, located apart from said power source, and located apart from said motive component and said power source.
13. A vehicle comprising an electronically actuated dropper seatpost as claimed in any preceding Feature.
14. The vehicle of Feature 13 in the form of a: bicycle such as a road bike, a mountain bike, a gravel bike, an electric bike (e-bike), a hybrid bike; a scooter; a motorcycle an all terrain vehicle (ATV); a personal water craft (PWC); a multi-wheeled vehicle, such as a two-, three- or four-wheeled vehicle; a snow mobile; a utility terrain vehicle (UTV) such as a side-by-side.

## Claims

1. An electronically actuated seatpost, comprising:
a first tube telescopically coupled with a second tube, wherein the second tube is substantially static with respect to a bicycle frame; and
a power source for supplying power to operate a seatpost height adjustment system, wherein the power source is not coupled with first tube.

2. An electronically actuated seatpost as claimed in claim 1, wherein said seatpost height adjustment system comprises:
an actuating unit;
at least one controller configured to operate the actuating unit; and
at least two wires connecting the actuating unit with the at least one controller;
optionally wherein the actuating unit is configured to operate a valve.

3. An electronically actuated seatpost as claimed in claim 2, wherein the at least two wires are located in a gap between the first tube and the second tube or in a gap between sliding parts of the seatpost.

4. An electronically actuated seatpost as claimed in claim 2 or 3, wherein the at least one controller is configured to:
sense electrical current supplied to the actuating unit; and/or
determine a state of the actuating unit, optionally to control a power supply to the actuating unit based on the determined state of the actuating unit.

5. An electronically actuated seatpost as claimed in claim 2, 3 or 4, wherein the at least one controller is located at the second tube.

6. An electronically actuated seatpost as claimed in any of claims 2 to 5, wherein the at least one controller is configured to stop the power supply to the actuating unit:
in response to an input indicative of a stall state of the actuating unit; and/or
when current supplied to the actuating unit satisfies predetermined criteria.

7. An electronically actuated seatpost as claimed in any if claims 2 to 6, wherein a location of the at least one controller is selected from a group consisting of: a location at the second tube, a location spaced apart from the seatpost, a location inside the seatpost, a location at a bicycle frame, a location inside a bicycle component, a location at a bicycle component, a location that is spaced apart from the power source, a location that is proximal to the power source, or any combinations thereof.

8. An electronically actuated seatpost as claimed in any of claims 2 to 7, wherein the actuating unit comprises:
a motor or a solenoid; and
wherein the seatpost comprises:
a microcontroller and a motor controller.

9. An electronically actuated seatpost as claimed in any of claim 2 to 8, wherein said at least one controller is removably coupled with said seatpost.

10. An electronically actuated seatpost as claimed in any preceding claim, wherein the power source is at least one of:
removable or integrated with the seatpost;
an electric bicycle battery;
rechargeable;
located on a portion of the seatpost that does not move with respect to said bicycle frame, such as said second tube;
located at or near a seat tube collar of the seatpost;
located at an upper portion of a part of the seatpost, which is substantially static with respect to said bicycle frame.

11. An electronically actuated seatpost as claimed in any of claim 2 to 9, wherein the power source is co-located with said at least one controller or at a location proximal to the at least one controller.

12. An electronically actuated seatpost, comprising:
a first tube telescopically coupled with a second tube, wherein the second tube is substantially static with respect to a bicycle frame;
at least one controller configured to operate a seatpost height adjustment system, wherein the at least one controller is located at the second tube.

13. An electronically actuated seatpost as claimed in 12, wherein the seatpost height adjustment system further comprises:
an actuating unit; and
at least two wires connecting the actuating unit with the at least one controller;
optionally wherein the actuating unit is configured to operate a valve;
optionally wherein the actuating unit comprises a motor or a solenoid.

14. An electronically actuated seatpost as claimed in 13, wherein the at least two wires are located in a gap between the first tube and the second tube or in a gap between sliding parts of the seatpost.

15. An electronically actuated seatpost as claimed in 12, 13 or 14, wherein the at least one controller is configured to:
sense electrical current supplied to the actuating unit; and/or
determine a state of the actuating unit, and optionally to control a power supply to the actuating unit based on the determined state of the actuating unit.

16. An electronically actuated seatpost as claimed in any of claims 12 to 15, wherein the at least one controller is configured to stop a power supply to the actuating unit:
in response to an input indicative of a stall state of the actuating unit; and/or
when current supplied to the actuating unit satisfies predetermine criteria.

17. An electronically actuated seatpost as claimed in any of claims 13 to 16, wherein the seatpost comprises a microcontroller and a motor controller.

18. An electronically actuated seatpost as claimed in any of claims 14 to 17, wherein the seatpost comprises:
a power source;
optionally wherein the power source is an electric bicycle battery;
optionally wherein the power source is rechargeable;
optionally wherein the power source is removable or integrated with the seatpost;
optionally the location of the power source is selected from a group consisting of: a location at the second tube, a location spaced apart from the seatpost, a location inside the seatpost, a location at a bicycle frame, a location inside a bicycle component, a location at a bicycle component, a location that is spaced apart from the at least one controller, a location that is proximal to the at least one controller, or any combinations thereof;
optionally wherein the power source is located on a portion of the seatpost that does not move with respect to said bicycle frame, such as said second tube;
optionally wherein the power source is located at or near a seat tube collar of the seatpost;
optionally wherein the power source is co-located with said at least one controller;
optionally wherein the power source is at a location proximal to the at least one controller.

19. An electronically actuated seatpost as claimed in any of claims 12 to 18, wherein said at least one controller is removably coupled with said seatpost.
